# EUROPEAN PATENT APPLICATION

(11) **EP 4 289 540 A1**
(43) Date of publication of application: **13.12.2023**
(21) Application number: 23178496.8
(22) Date of filing: 09.06.2023
(51) Int. Cl.: B23K 9/04, B23K 9/16, B23K 9/29, B33Y 30/00, B22F 12/70, B22F 12/53

(54) **PRINTING HEADS**

(30) Priority: 09.06.2022 US 202263366126 P; 07.10.2022 US 202263378839 P
(71) Applicant: Relativity Space, Inc., Long Beach, CA 90815 (US)
(72) Inventor: GRUBER, Fritz, Long Beach, 90815 (US); KROL, Jeremy, Long Beach, 90815 (US); GRAY, Justin, Long Beach, 90815 (US); WATSON, Bryan, Long Beach, 90815 (US)
(74) Representative: EIP

(57) **Abstract**

Many embodiments described herein are directed to a printing nozzle capable of producing a high-pressure flow of shielding gas that surrounds a lower pressure flow of shielding gas of the central channel. In certain embodiments, the high-pressure shield gas flow in the internal channels can blow out the material buildup in the nozzle. The high-pressure shielding gas can be concentrically produced around the first low-pressure shielding gas such that it helps to force the first shielding gas into a more laminar flow around the feed material. In several embodiments, a second low-pressure flow of shielding gas can be produced using a secondary cup to increase shielding gas coverage. In various embodiments, a secondary cup surrounds the inner cup, where the gas flow in the central channel and the outer channel can provide shielding gas coverage for the nozzle during printing.

## Description

### CROSS-REFERENCE TO RELATED APPLICATIONS

The current application claims the benefit of U.S. Provisional Patent Application No. 63/366,126, entitled "High Pressure Printing Head," filed June 9, 2022, and U.S. Patent Application No. 63/378,839, entitled "High Pressure Printing Head," filed October 7, 2022. The disclosures of U.S. Provisional Patent Application No. 63/366,126 and U.S. Patent Application No. 63/378,839 are incorporated by reference in their entirety for all purposes.

### FIELD OF THE INVENTION

This application generally refers to printing heads used in wire-based additive manufacturing. More specifically, this application relates to printing heads that can produce a high-pressure laminar flow of shielding gas.

### BACKGROUND

Additive manufacturing is a process by which a product or part is manufactured by adding one layer of material on top of another in a sequence or pattern that results in a solid part being built. This method of manufacturing is referred to as three dimensional or 3-D printing and can be done with different materials, including plastic and metal.

Wire-based 3-D printing of metallic structures can involve using an energy source to create a weld pool, and feeding a metal wire (feed material) into the weld pool by way of a printing head or printing head nozzle. Energy is used to create the weld pool. Some systems use electricity and others use lasers for the energy. Electric systems typically pass an electric current through the feed wire into the weld pool. The printing head, and subsequently the weld pool can be moved. As the printing head and the weld pool moves, the trailing edge of the pool cools and solidifies. Through this process of gradually moving the printing head along a path, and depositing one layer on a previous layer, a fully printed part is formed.

The process by which material is deposited can be controlled by the use of shielding gas around the feed material. The shielding gas can protect the weld pool from corrosive gases and moisture.

### SUMMARY OF THE INVENTION

Systems and methods in accordance with some embodiments of the invention are directed to a printing head that is configured to produce concentric flows of shielding gas around a feed material for manufacturing metallic parts.

One embodiment of the invention includes a printing nozzle comprising: a main cylindrical body forming a first fluid flow channel extending a length of the body from a proximal end and a distal end and configured to receive a first fluid; and a second cylindrical body forming a second fluid flow channel concentrically located exterior to the first fluid flow channel, and the second fluid flow channel extends a length of the body from a proximal end and a distal end and configured to receive a second fluid and direct the second fluid surrounding the first fluid flow; where the proximal end of the main cylindrical body is adjacent to the proximal end of the second cylindrical body; and where the distal end of the main cylindrical body aligns with the distal end of the second cylindrical body.

Another embodiment further comprises a plurality of diffuser holes circumferentially disposed on the main cylindrical body wherein each of the plurality of diffuser holes connects the second fluid flow channel to an exterior surface of the main cylindrical body.

An additional embodiment further comprises an external housing, wherein the external housing cooperatively engages with the exterior surface of the main cylindrical body and forms a seal therebetween, the external housing has an external housing wall that sits away from the exterior surface of the main cylindrical body and forms a chamber therebetween, wherein the external housing is aligned with the main cylindrical body such that the chamber covers each of the plurality of diffuser holes, and wherein the external housing has a fluid inlet configured to receive a fluid and transmit the fluid into the chamber such that the fluid can then be transferred to the second fluid channel by way of the plurality of diffuser holes.

In a further embodiment, the fluid inlet has an exterior surface that extends to a top surface of the external housing.

In another further embodiment, the fluid inlet has an elongated body that extends outward from the external housing and is perpendicular to the housing with an opening that connects the chamber to a fluid supply system.

In yet another embodiment, the second fluid flow channel is configured to maintain the second fluid at a pressure greater than or equal to a pressure of the first fluid.

In a yet further embodiment, the second fluid flow channel comprises a diffuser comprising a plurality of holes, wherein the diffuser is configured to reduce a velocity of the second fluid.

In another embodiment again, the nozzle is configured to connect with a wire arc additive manufacturing printer.

In yet another embodiment, the first fluid is selected from the group consisting of: carbon dioxide, argon, helium, nitrogen, neon, xenon, oxygen, and any combinations thereof; wherein the second fluid is selected from the group consisting of: carbon dioxide, argon, helium, nitrogen, neon, xenon, oxygen, and any combinations thereof.

In a further embodiment again, the nozzle comprises a metallic material selected from the group consisting of: a Ni-based alloy, a Ni-based superalloy, a Ni-Cr based alloy, a Cu-based alloy, a Cu-Ni-based alloy, a Cu-Cr-Nb alloy, a Cu-Co-Nb-based alloy, a ferrous alloy, an iron-based alloy, a Co-Cr-based alloys, a Ti-based alloy, and a steel.

Another embodiment includes a printing nozzle comprising: a main cylindrical body having a first end having a first diameter and a second end having a second diameter that is smaller than the first diameter, wherein the main cylindrical body has a wall with an outer surface and an inner surface, wherein the wall extends a longitudinal length of the main cylindrical body between the first and second end; a second cylindrical body having a first end having a first diameter and a second end having a second diameter that is smaller than the first diameter, wherein the second cylindrical body has a wall with an outer surface and an inner surface, wherein the wall extends a longitudinal length of the second cylindrical body between the first and second end, wherein the second cylindrical body concentrically located exterior to the main cylindrical body; wherein the first end of the second cylindrical body is adjacent to the first end of the main cylindrical body; wherein the inner surface of the main cylindrical body forms a first fluid flow channel configured to receive a first fluid; the outer surface of the main cylindrical body and the inner surface of the second cylindrical body forms a second fluid flow channel configured to receive a second fluid; a plurality of diffuser holes circumferentially disposed on the wall of the main cylindrical body such that each of the plurality of diffuser holes transcends through the wall connecting the second fluid channel with the outer surface of the main cylindrical body.

A further embodiment comprises an external housing, wherein the external housing cooperatively engages with the outer surface of the main cylindrical body and forms a seal therebetween, wherein the external housing has an external housing wall that sits away from the outer surface of the main cylindrical body and forms a chamber therebetween, wherein the external housing is aligned with the main cylindrical body such that the chamber covers each of the plurality of diffuser holes, and wherein the external housing has a fluid inlet configured to receive the second fluid and transmit the second fluid into the chamber such that the second fluid can then be transferred to the second fluid channel by way of the plurality of diffuser holes.

In another embodiment, the fluid inlet has an exterior surface that extends to a top surface of the external housing.

In yet another embodiment, the fluid inlet has an elongated body that extends outward from the external housing and is perpendicular to the housing with an opening that connects the chamber to a fluid supply system.

In an additional embodiment, the second fluid flow channel is configured to maintain the second fluid at a pressure greater than or equal to a pressure of the first fluid.

In another yet embodiment, the second fluid flow channel comprises a diffuser comprising a plurality of holes, wherein the diffuser is configured to reduce a velocity of the second fluid.

In yet another further embodiment, the nozzle is configured to connect with a wire arc additive manufacturing printer.

In a further yet embodiment, the first fluid is selected from the group consisting of: carbon dioxide, argon, helium, nitrogen, neon, xenon, oxygen, and any combinations thereof; wherein the second fluid is selected from the group consisting of: carbon dioxide, argon, helium, nitrogen, neon, xenon, oxygen, and any combinations thereof.

In an additional embodiment again, the nozzle comprises a metallic material selected from the group consisting of: a Ni-based alloy, a Ni-based superalloy, a Ni-Cr based alloy, a Cu-based alloy, a Cu-Ni-based alloy, a Cu-Cr-Nb alloy, a Cu-Co-Nb-based alloy, a ferrous alloy, an iron-based alloy, a Co-Cr-based alloys, a Ti-based alloy, and a steel.

Another further embodiment includes a printing nozzle comprising: a main cylindrical body wherein the main cylindrical body has a first fluid flow channel extending a length of the body from a proximal end and a distal end and configured to receive a first fluid; and a second fluid flow channel concentrically located exterior to the first fluid flow channel and within the main cylindrical body and configured to receive a second fluid and direct the second fluid such that, when the printing nozzle is in use, the second fluid surrounds the first fluid flow and controls the turbulence of the first fluid flow, wherein the second fluid flow channel is configured to maintain the second fluid at a higher pressure than the first fluid.

An additional embodiment further comprises a plurality of diffuser holes circumferentially disposed about the main cylindrical body wherein each of the plurality of diffuser holes connects the second fluid flow channel to an exterior surface of the main cylindrical body.

Yet another embodiment further comprises an external housing, wherein the external housing cooperatively engages with the exterior surface of the main cylindrical body and forms a seal therebetween, the external housing has an external housing wall that sits away from the exterior surface of the main cylindrical body and forms a chamber therebetween, wherein the external housing is aligned with the main cylindrical body such that the chamber covers each of the plurality of diffuser holes, and wherein the external housing has a fluid inlet configured to receive a fluid and transmit the fluid into the chamber such that the fluid can then be transferred to each of the plurality of channels by way of the plurality of diffuser holes.

In a further embodiment again, the fluid inlet has an exterior surface that extends to a top surface of the external housing.

In another further embodiment, the fluid inlet has an elongated body that extends outward from the external housing and is perpendicular to the housing with an opening that connects the chamber to a fluid supply system.

An additional embodiment includes a high-pressure printing nozzle comprising: a main cylindrical body having a first end having a first diameter and a second end having a second diameter that is smaller than the first diameter, wherein the main cylindrical body has an outer wall with an outer surface and an inner surface, wherein the outer wall extends a longitudinal length of the main cylindrical body between the first and second end; an inner wall of the main cylindrical body connected to the outer wall at an upper surface and concentrically disposed within the main cylindrical body separated from the outer wall by a predetermined distance away from the inner surface of the outer wall thereby forming a space therebetween, wherein the inner wall extends along the longitudinal length of the outer wall to a first setback point away from the second end and within the main cylindrical body forming a high-pressure exit; a plurality of support structures concentrically disposed within the space between the outer wall and the inner wall and extending longitudinally along the length of the inner wall to a second setback point away from the high-pressure exit forming a plurality of channels in the space between the outer wall and the inner wall; and a plurality of diffuser holes concentrically disposed within the outer wall of the main cylindrical body such that each of the plurality of diffuser holes extends from the outer surface to the inner surface connecting each of the plurality of channels with an exterior portion of the main cylindrical body, wherein each of the plurality of diffuser holes are configured to receive a high pressure fluid, transmit said high-pressure fluid into the space between the outer wall and the inner wall, and forming a high-pressure fluid at the high-pressure exit.

Another embodiment further comprises an external housing, wherein the external housing cooperatively engages with the exterior surface of the main cylindrical body and forms a seal therebetween, wherein the external housing has an external housing wall that sits away from the exterior surface of the main cylindrical body and forms a chamber therebetween, wherein the external housing is aligned with the main cylindrical body such that the chamber covers each of the plurality of diffuser holes, and wherein the external housing has a fluid inlet configured to receive a fluid and transmit the fluid into the chamber such that the fluid can then be transferred to each of the plurality of channels by way of the plurality of diffuser holes.

Another further embodiment includes a printing nozzle comprising: a main cylindrical body wherein the main cylindrical body has a first fluid flow channel extending a length of the body from a proximal end and a distal end and configured to receive a first fluid; and a second fluid flow channel concentrically located exterior to the first fluid flow channel and within the main cylindrical body and configured to receive a second fluid and direct the second fluid such that the second fluid flow channel is configured to maintain the second fluid at a higher pressure than the first fluid.

An additional embodiment comprises a third fluid flow channel concentrically located exterior to the second fluid flow and configured to receive a third fluid and direct the third fluid such that, when the printing nozzle is in use, the third fluid surrounds the second fluid flows and controls the turbulence of the first fluid flow, wherein the third fluid flow channel is configured to maintain the third fluid at a similar pressure as the first fluid.

Another further embodiment comprises a plurality of diffuser holes circumferentially disposed about the main cylindrical body wherein each of the plurality of diffuser holes connects the second fluid flow channel to an exterior surface of the main cylindrical body.

An additional further embodiment comprises an external housing, wherein the external housing cooperatively engages with the exterior surface of the main cylindrical body and forms a seal therebetween, the external housing has an external housing wall that sits away from the exterior surface of the main cylindrical body and forms a chamber therebetween, wherein the external housing is aligned with the main cylindrical body such that the chamber covers each of the plurality of diffuser holes, and wherein the external housing has a fluid inlet configured to receive a fluid and transmit the fluid into the chamber such that the fluid can then be transferred to each of the plurality of channels by way of the plurality of diffuser holes.

In a further yet embodiment, the fluid inlet has an exterior surface that extends to a top surface of the external housing.

In yet another embodiment, the fluid inlet has an elongated body that extends outward from the external housing and is perpendicular to the housing with an opening that connects the chamber to a fluid supply system.

Yet another embodiment includes a high-pressure printing nozzle comprising: a first cylindrical body having a first end having a first diameter and a second end having a second diameter that is smaller than the first diameter, wherein the first cylindrical body has an outer wall with an outer surface and an inner surface, wherein the outer wall extends a longitudinal length of the first cylindrical body between the first and second end; an inner wall of the first cylindrical body connected to the outer wall at an upper surface and concentrically disposed within the first cylindrical body separated from the outer wall by a predetermined distance away from the inner surface of the outer wall thereby forming a space therebetween, wherein the inner wall extends along the longitudinal length of the outer wall to a first setback point away from the second end and within the first cylindrical body forming a high-pressure exit; a second cylindrical body having a first end having a first diameter and a second end having a second diameter that is smaller than the first diameter, wherein the second cylindrical body has an outer wall with an outer surface and an inner surface, wherein the outer wall extends a longitudinal length of the second cylindrical body between the first and second end, wherein the first and second diameters of the second cylindrical body are greater than the first and second diameters of the first cylindrical body; wherein the first cylindrical body and the second cylindrical body are concentrically located; an inner wall of the second cylindrical body connected to the outer wall at an upper surface and concentrically disposed within the second cylindrical body separated from the outer wall by a predetermined distance away from the inner surface of the outer wall thereby forming a space therebetween, wherein the inner wall extends along the longitudinal length of the outer wall to a second setback point away from the second end and within the second cylindrical body forming a second high-pressure exit; a plurality of support structures concentrically disposed within the space between the outer wall and the inner wall and extending longitudinally along the length of the inner wall to a second setback point away from the high-pressure exit forming a plurality of channels in the space between the outer wall and the inner wall; and a plurality of diffuser holes concentrically disposed within the outer wall of the main cylindrical body such that each of the plurality of diffuser holes extends from the outer surface to the inner surface connecting each of the plurality of channels with an exterior portion of the main cylindrical body, wherein each of the plurality of diffuser holes are configured to receive a high pressure fluid, transmit said high-pressure fluid into the space between the outer wall and the inner wall, and forming a high-pressure fluid at the high-pressure exit.

Another further embodiment comprises an external housing, wherein the external housing cooperatively engages with the exterior surface of the first cylindrical body and forms a seal therebetween, wherein the external housing has an external housing wall that sits away from the exterior surface of the first cylindrical body and forms a chamber therebetween, wherein the external housing is aligned with the first cylindrical body such that the chamber covers each of the plurality of diffuser holes, and wherein the external housing has a fluid inlet configured to receive a fluid and transmit the fluid into the chamber such that the fluid can then be transferred to each of the plurality of channels by way of the plurality of diffuser holes.

Additional embodiments and features are set forth in part in the description that follows, and in part will become apparent to those skilled in the art upon examination of the specification or may be learned by the practice of the disclosure. A further understanding of the nature and advantages of the present disclosure may be realized by reference to the remaining portions of the specification and the drawings, which forms a part of this disclosure.

### BRIEF DESCRIPTION OF THE DRAWINGS

The description will be more fully understood with reference to the following figures. Embodiments of the invention in these figures and should not be construed as a complete recitation of the scope of the invention.
Figs. 1A and 1B illustrate a welding nozzle in accordance with prior art.
Figs. 2A through 2D conceptually illustrate a printing head nozzle with an internal high-pressure flow channel in accordance with embodiments.
Figs. 3A through 3C conceptually illustrate a printing head nozzle with an internal high-pressure flow channel and an upper flange in accordance with embodiments.
Figs. 4A and 4C conceptually illustrate a two-piece high-pressure printing head nozzle with an internal high-pressure flow channel in accordance with embodiments.
Figs. 5A through 5G conceptually illustrate a one-piece high-pressure printing head nozzle with an internal high-pressure flow channel in accordance with embodiments.
Figs. 6A through 6D conceptually illustrate a high-pressure printing head nozzle with an internal high-pressure flow channel and a slip-on connection in accordance with embodiments.
Figs. 7A and 7B conceptually illustrate concentric flow channels in accordance with embodiments.
Figs. 8A through 8F conceptually illustrate a one-piece high-pressure printing head nozzle with two cups in accordance with embodiments.
Fig. 8G illustrates a comparison of a one-cup high-pressure printing head nozzle and a two-cup printing head nozzle in accordance with embodiments.
Figs. 8H and 8I conceptually illustrate a one-piece high-pressure printing head nozzle with a diffuser in the secondary cup in accordance with embodiments.
Figs. 9A through 9I conceptually illustrate two-cup high-pressure printing head nozzle of various configurations in accordance with embodiments.
Figs. 10A through 10B conceptually illustrate a two-cup printing head nozzle in accordance with embodiments.
Figs. 11A through 11B conceptually illustrate a two-cup printing head nozzle with a diffuser in accordance with embodiments.
Figs. 11C through 11D illustrates a printed one-piece two-cup printing head nozzle in accordance with embodiments.
Figs. 12A through 12B conceptually illustrate a two-cup printing head nozzle with a diffuser and modified exit geometry in accordance with embodiments.
Figs. 13A through 13B conceptually illustrate a two-piece two-cup printing head nozzle in accordance with embodiments.
Figs. 13C through 13D illustrates a printed two-piece two-cup printing head nozzle in accordance with embodiments.

### DETAILED DESCRIPTION OF THE INVENTION

Systems and methods for producing a laminar flow of shielding gas are illustrated in the description herein. Spatter produced during the deposition process can clog the nozzle and significantly affect gas flow and coverage resulting in poor deposition and ultimately poor material properties. The printing head in accordance with many embodiments can provide adequate gas coverage and prevent spatter build-up from deposition in order to increase continuous run time. Some embodiments described herein provide an added advantage of reducing the cleaning time for cleaning material build up around the nozzle tip which can reduce costs associated with producing complex metal parts with additive manufacturing.

Several embodiments include print heads with (but not limited to) improved nozzles to provide uniform gas coverage and/or prevent spatter build-up during the printing process. The improvements of the nozzles in accordance with many embodiments can be applied to wire-based additive manufacturing and/or wire arc additive manufacturing in vertical orientations and/or in horizontal orientations. Examples of improvement include (but are not limited to) coating the nozzle, incorporating blowout functions, positioning the nozzle further from the contact tip, and any combinations thereof. The nozzles in accordance with certain embodiments can be made of materials including (but not limited to): metals, metal alloys, copper-based alloys, plastics, ceramics, and any combinations thereof. In many embodiments, high temperature refractory ceramic coatings can be applied to the nozzles for casting release and/or casting repairs. Ceramic coatings in accordance with some embodiments can be non-wetting to the molten print material including (but not limited to) metals, metal alloys, aluminum, aluminum-based alloys. Examples of coating materials include (but are not limited to) boron nitride, carbon, and graphite.

Many embodiments incorporate blowout functions by adding internal channels (also referred as internal high-pressure channels) to the nozzle to increase the velocity of gas flow. In some embodiments, the internal channels can have smaller cross-section area compared to the central channels for the feed material in order to generate high velocity gas flow. Higher gas flow velocity can perform blow-out functions and prevent spatter build-up. In some embodiments, high velocity gas flow in the internal channels enables blow out functions of the nozzle. The blow out functions can clear up material buildup at the contact tip of the nozzle. The high velocity gas flow can run intermittently. In a number of embodiments, the high velocity gas flow can be used to clean up material buildup when the print head is not printing. Several embodiments are directed to a nozzle for a metallic additive manufacturing head that is configured with concentric and separate fluid flow channels for directing the flow of a shielding gas around a feed material. Embodiments have an internal channel that extends from an upper closed end near the proximal end of the nozzle that interfaces with the printing device. The internal channel extends along the length of the nozzle and runs parallel to a main central channel to an opening near the opening of the nozzle at the distal end of the body. The internal channel can be supported by one or more support fixtures that traverse the width of the channel and connect the exterior wall of the nozzle with an interior wall. In embodiments the internal channel is connected to the external surface of the external wall of the nozzle by one or more different holes. These holes can serve to direct the flow of a high-pressure gas into the internal channel.

In several embodiments, the opening of the internal channels at the distal end of the body can locate at a distance from the opening of the main central channel. The distance in accordance with some embodiments can be from about 1 mm to about 15 mm; or about 2 mm; or about 5 mm; or about 8 mm; or about 12 mm; or greater than about 15 mm; or less than about 1 mm.

In many embodiments, the nozzles can be positioned further back relative to the contact tip face to reduce the amount of spatter that can reach the nozzle. Conventionally, the nozzle extends about 2 mm from the contact tip face. Several embodiments move the nozzle further back to be less than about 2 mm from the contact tip face. In certain embodiments, the nozzle can be positioned behind the contact tip face. The inventors realized that there are several challenges with moving the nozzle back from the contact tip face. One challenge can be gas coverage. Because the laminar section of flow is much smaller compared to the turbulent flow, moving the nozzle back even a few millimeters may significantly change where the laminar to turbulent flow transition happens. If the transition to laminar flow happens too far above the weld bead, it can introduce air leading to an unstable arc and result in poor material properties. A second challenge can be that the density of argon is higher than the density of air. For additive manufacturing, the argon coming out of the nozzle sinks due to the higher density, which may result in a gas flow profile that is slightly arced down. The further away from the print part, the lower gas flow profile from the weld bead it may become. A number of embodiments address the challenge of sinking gas flow by increasing gas flow coverage and/or velocity. Higher gas flow velocity and/or higher gas coverage of the nozzle can minimize the effect of gas sinking due to positioning the nozzle further back relative to the contact tip. In some embodiments, a secondary cup can be added to nozzles to increase gas coverage.

Nozzles in accordance with a number of embodiments have a distance between the open end of the high-pressure channel and the open end of the central channel. The distance can vary from about 2 mm to about 15 mm; or about 2 mm; or about 6 mm; or about 8 mm; or about 10 mm; or about less than about 2 mm; or greater than about 10 mm. Several embodiments cut back the nozzle by shifting the thread location relative to the rest of the nozzle. Many embodiments keep the same thread counts and/or thread geometries when the thread location is shifted.

Embodiments are also configured with high-pressure housings that engage with the external wall of the nozzle. The high-pressure housing has an inlet that receives a shielding gas. The shielding gas passes through the inlet into a pressure chamber. The pressure chamber is formed between an internal wall of the housing and the external wall of the nozzle. The pressure chamber is configured to engage with or cover each of the holes (also referred to in this description as diffuser holes) that run through the external wall of the nozzle such that gas can flow from the chamber into the internal channel of the nozzle. The pressure chamber can be embodied as, what this specification terms wall diffusers, which evenly distribute gas concentrically to get a more uniform flow. In some embodiments, the diffuser holes of the pressure chamber of the internal high-pressure channels can be on the same cross section plane or on the different cross section plane as the inlets. As gas is fed into the chamber through the inlet, pressure can build up, because the gas will not immediately enter the internal nozzle channel. Additionally, as pressure builds, the flow of the gas into the internal channel increases in speed due to the constricted diameter of the internal channel. Accordingly, the high pressure and high velocity of gas helps to stabilize or reduce the turbulent flow of the gas moving through the main channel of the nozzle. In addition, the flow of the high-pressure gas can be regulated. In other words, the flow does not have to be consistent nor does the flow have to be maintained throughout the process of building a part. For example, embodiments can utilize the high-pressure flow channel to direct bursts of higher-pressure gas through the nozzle. The higher-pressure bursts can be used to remove any buildup of material around the print head and more specifically the tip of the nozzle. This can be advantageous to allow for shorter down times in printing and keep the part temperature consistent throughout the build.

Several embodiments implement a secondary cup (also referred as an outer cup and/or a secondary cylinder) in the nozzle to increase shielding gas coverage. The cylinder that forms the central channel can be referred as an inner cup and/or a first cylinder. An outer channel can be formed by the space between the first cylinder and the second cylinder. Additional shielding gas can be flown in the outer channel to increase shielding gas coverage.

The secondary cup in accordance with some embodiments can have a shape of concentric or coaxial cylinder. In a number of embodiments, the internal high-pressure inlet cylinder and the central channel cylinder can be positioned within the inner diameter of the secondary cylinder. The cylinders of the central channel, the internal high-pressure channel, and the secondary cylinder are concentrically aligned. The gas flow in the secondary cup can have a pressure of less than about 15 psi; or from about 15 psi to about 20 psi; or greater than about 20 psi; or from about 20 psi to about 30 psi; or greater than about 30 psi; or greater than about 50 psi; or greater than about 100 psi. In certain embodiments, the secondary cup can have a lower gas velocity compared to the gas velocity in the internal high-pressure channel. In several embodiments, the secondary cup can have a gas flow velocity greater than or equal to the gas velocity in the central channel. In some embodiments, the secondary cup can have a similar gas flow velocity compare to the gas flow velocity in the central channel. In a number of embodiments, the gas flow in the secondary cup and the gas flow in the central channel can run continuously to provide gas coverage for the nozzle during printing. In many embodiments, the gas flow velocity in various channels can be kept the same and/or different. The gas flow in the secondary cup can be kept at a different flow rate compare to the gas flow rate in the central channel in order to keep the same gas flow velocities in the two channels in accordance with certain embodiments. In some embodiments, a higher pressure (such as pressure higher than about 1000 psi) can be used to remove any build up on the secondary cup. In certain embodiments, the gas flow in the secondary cup can be controlled turbulent flow. Some embodiments control the turbulent flow by controlling the mixing length of flow, and/or how far air can mix into the flow.

In many embodiments, the secondary cups are configured with pressure housings and/or high-pressure housings that engage with the external wall of the nozzle. The pressure housing has inlets that receive shielding gases. Shielding gases pass through the inlets into a secondary cup pressure chamber. The secondary cup pressure chambers can be embodied as what this specification calls wall diffusers. The secondary cup pressure chamber is configured to engage with or cover each of the holes (diffuser holes) that run through the external wall of the nozzle such that gas can flow from the chamber into the outer channel of the secondary cup of the nozzle. The pressure chambers enable even distribution of gas concentrically to get a more uniform flow. The diffuser holes of the secondary cup can be on the same plane or on the different plane as the inlets in accordance with some embodiments. In certain embodiments, the diffuser holes are on a plane that is different from the inlets such that the diffuser holes can diffuse the gas better.

In several embodiments, nozzles can have at least one high-pressure housing to introduce shielding gases. Inlets and the pressure chambers can be arranged in various locations on nozzles to adapt to different types of torch configurations. In certain embodiments, nozzles can have two inlets that are about 180 degrees apart from each other.

In many embodiments, nozzles can have a cylindrical shape with a circular cross section. In certain embodiments, nozzles and/or nozzle assemblies can have a central channel that has a shape of concentric or coaxial cylinder. Nozzles and/or nozzle assemblies in accordance with some embodiments can have internal high-pressure channels that have a shape of concentric or coaxial cylinder. In such embodiments, the internal high-pressure channel can be formed by an internal cylinder and the central channel cylinder can be positioned within the inner diameter of the internal cylinder. Internal cylinders can be referred as internal cups and/or internal channel cylinders. Central channel cylinders can be referred as first cylinders and/or inner cups. The internal cup surrounds the inner cup such that the cylinders of the central channel and the internal high-pressure cylinder are concentrically aligned. This helps to ensure that the high-pressure shielding gas completely surrounds the lower pressure shielding gas that would be passed through the main central channel of the nozzle and/or nozzle assembly.

The first cylinder can be positioned within the inner diameter of the second cylinder. The first and the second cylinders are concentrically aligned such that the shielding gas from the outer channel of the secondary cup can provide coverage for the main central channel. Secondary cups can be referred as second cylinders and/or outer cups. The secondary cup helps to expand the shielding gas coverage around the molten materials during additive manufacturing processes. In several embodiments, the internal high-pressure channels allow gas flow at different flow rates between the inner and outer channels.

In some embodiments, the inner cup can have a diameter from about 15 mm to about 20 mm; or less than about 15 mm; or greater than about 20 mm. In certain embodiment, the outer cup can have a diameter from about 27 mm to about 35 mm; or less than about 27 mm; or greater than about 35 mm. The outer cup has a diameter that is larger than the inner cup. The outer cup can have an angle formed between the vertical wall and the slant wall of the outer cup. The angle can range from about 160 degrees to about 170 degrees; or less than about 160 degrees; or greater than about 170 degrees.

Many embodiments include diffusers in the nozzle to reduce the velocity of gas and reduce turbulence in the body of the secondary cup before exiting the nozzle. The diffusers can be placed in the secondary cup. Diffusers in the secondary cup are different from the wall diffusers and/or the pressure chambers. Diffusers in accordance with various embodiments can have different configurations and include various numbers of rings. Each ring comprises a plurality of holes. In several embodiments, the cross-sectional area of the diffuser rings can be increased to reduce the gas velocity. Higher number of the diffuser rings and/or smaller size holes in the diffuser rings can increase the cross-sectional area. Examples of different configurations of diffusers can include (but are not limited to): 2-ring diffuser, 3-ring diffuser, 4-ring diffuser, 5-ring diffuser, 6-ring diffuser. Examples of the average diameter of holes on diffuser rings include (but are not limited to) about 1.5 mm; or less than about 1.5 mm; or greater than about 1.5 mm.

In several embodiments, the nozzle can have a conical shape. The angle of the cone of the nozzle can vary from about 15 degrees to about 20 degrees. In some embodiments, the nozzle can have a smooth contour to enhance the laminar flow.

As can be appreciated, shielding gases can be any suitable gas for the process. Examples of shielding gases include (but are not limited to) carbon dioxide, argon, helium, nitrogen, neon, xenon, oxygen, and any combinations thereof. Accordingly, in various embodiments, the central channels, the outer channels, and the high-pressure channels can use the same or different shielding gasses. In certain embodiments, the central channels and the outer channels can use the same or different shielding gasses.

Various nozzles in accordance with embodiments can be produced via additive manufacturing, printing, 3D printing, and/or powder-based printing. Examples of additive manufacturing processes for manufacturing nozzles include (but are not limited to) powder bed fusion (PBF), laser powder bed fusion (L-PBF), laser powder bed (LPB), direct metal laser melting (DMLM), direct metal laser sintering (DMLS), selective laser sintering (SLS), selective heat sintering (SHS), laser metal fusion (LMF), laser metal deposition (LMD), selective laser melting (SLM), laser powder directed energy deposition (LP-DED), cold spray additive manufacturing (CSAM), electron beam melting (EBM), direct metal deposition (DMD), binder jetting (BJ), and multi jet fusion (MJF).

In some embodiments, nozzles and/or parts of nozzles can be fabricated using machining. The inner cups and/or outer cups can be fabricated via machining into at least 2 pieces; or at least 3 pieces; or at least 4 pieces. The plurality of pieces can be joined and/or assembled together using screws, fasteners, straps, clamps, and/or adhesives, or using processes such as (but not limited to) machining.

Post manufacturing treatment including (but not limited to) machining and/or heat treatment can be applied to nozzles in order to achieve desired geometries, surface finishes, and/or mechanical properties.

In many embodiments, materials such as (but not limited to) metallic materials, polymeric materials, plastic materials, and/or ceramic materials, can be used for manufacturing inner cups, outer cups, and/or diffusers of nozzles. Various materials can be chosen based on a number of properties: high thermal conductivity; non-wetting characteristics; non-reactive with depositing materials; higher melting point than depositing materials; non-cracking during printing; sturdy, durable, and reusable. Examples of metallic materials include (but are not limited to) nickel (Ni)-based alloys, Ni-based superalloys, Ni-chromium (Cr) based alloys, copper (Cu)-based alloys, Cu-Ni-based alloys, Cu-Cr-niobium (Nb) alloys, Cu-cobalt (Co)-Nb-based alloys, ferrous alloys, iron-based alloys, Co-Cr-based alloys, titanium (Ti)-based alloys, and steel. Ni-based alloys can have high strength. Examples of Ni-based alloys include (but not limited to) Inconel^{®} alloys (such as lnconel^{®}-625 and/or lnconel^{®}-718), and/or Haynes^{®} alloys (such as Haynes^{®}-230). Cu-Co-Nb-based alloys can have high thermal conductivity. Examples of Cu-Co-Nb-based alloys include (but are not limited to) GRCop class alloys, GRCop-42, GRCop-84, C-18150, and C-18200. Examples of steel include (but are not limited to) tool steel, stainless steel, 316L, 17-4PH, low and/or medium carbon steel. Several embodiments use Cu-based alloys for printing nozzles and/or inner cups of nozzles. Some embodiments use steel for printing and/or machining outer cups of nozzles. Examples of polymeric materials and/or plastic materials include (but are not limited to) acrylonitrile butadiene styrene (ABS), polylactic acid (PLA), nylon, thermoplastic polyurethane (TPU), polyvinyl alcohol (PVA), high impact polystyrene (HIPS), composites, carbon fibers, Kevlar, fiberglass, resins, and any combinations thereof. Examples of ceramic materials include (but are not limited to) clay, porcelain, and any combinations thereof.

The inner cup and/or outer cup of the nozzle can be printed in an integral piece and/or separated pieces. Separated pieces of nozzles can be assembled after printing. In several embodiments, inner cup can be printed as an integral piece. In some embodiments, inner cup with various types of diffusers can be printed as an integral piece. In certain embodiments, outer cup can be printed as an integral piece. In some embodiments, outer cup can be printed in two pieces. Two-piece outer cup can be assembled around the inner cup and secured using screws, fasteners, straps, clamps, and/or adhesives, or using processes such as (but not limited to) machining.

Although various embodiments of the nozzle and/or nozzle assembly illustrate a concentrically connected high-pressure chamber, it should be understood that the chamber is merely representative of an embodiment and not intended to illustrate the only possible way of introducing a high-pressure flow of gas into the nozzle elements. It should be understood that other embodiments can be configured to introduce a high-pressure gas into the high-pressure channel of the nozzle from another means.

In addition to the advantages of producing a more laminar flow for the shielding gas, embodiments allow for improved processing time for printing. 3-D printing metallic parts can generate excess material that can adhere to and/or clog up the nozzle and nozzle tip. Traditionally, the nozzle would need to be removed or removed from the printing surface to be cleaned. In some instances, the cleaning process can pose unwanted risks to the printed part. For example, when the energy used to generate the molten bead of material is removed, the material and the part begin to cool. This can create unwanted stresses and potential issues with the printed part. Accordingly, embodiments of the high-pressure printing nozzle lend themselves to improved cleaning to allow for a more continuous printing operation. For example, as the tip of the nozzle becomes clogged or dirty the high-pressure channel can be used to generate a blast of high-pressure gas towards the tip. The high-pressure blast blows away excess material and cleans the tip of the printing nozzle. This can take only a few seconds versus minutes or longer of a more traditional cleaning method. Accordingly, the part being manufactured will not be allowed to cool more than a few seconds, allowing the printing process to continue without interruption. The reduction in cooling time allows for a higher quality part to be printed.

Although the various embodiments described herein are generally applicable to 3-D printing of metallic components, it can be appreciated that such embodiments can be applied to a variety of 3-D printing techniques. For example, embodiments can be adapted and used for Wire Arc Additive Manufacturing or WAAM and the various adaptations of WAAM. In accordance with embodiments, the printing nozzles described herein, having multiple flows of shielding gas, can be more conducive to utilizing more than one feed material wire into a printed part which can produce a higher quality printed part.

### Printing Heads

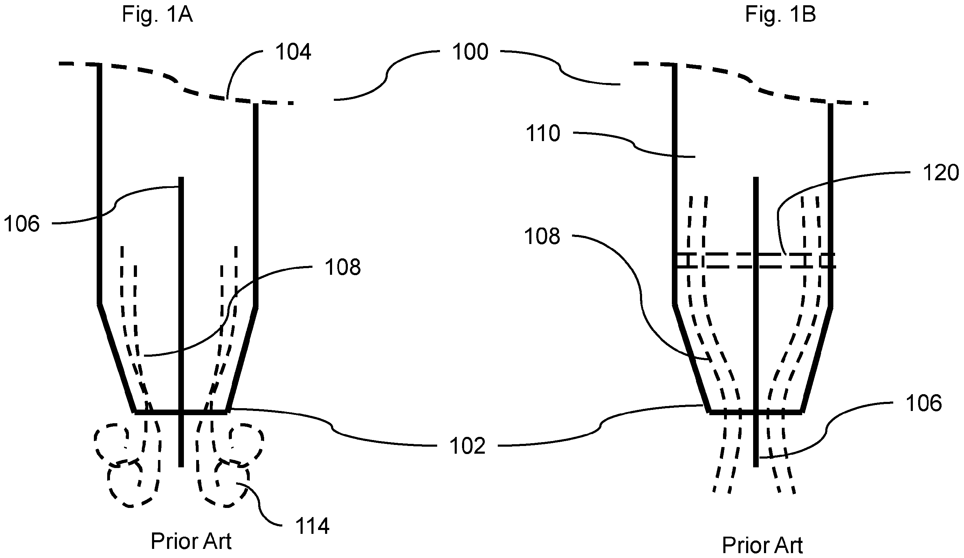

Many metallic printing devices utilize a traditional welding type nozzle that are simple tube-like structures as illustrated in Fig. 1, where the nozzle 100 has an exit tip 102 and a connection end 104. The connection end is connected, by some means, to a printing head. The printing head is configured to supply a feed metal 106 and a shielding gas 108 down the center channel 110 of the nozzle 100. The feed material 106 is used to create the weld pool through the application of a voltage on the feed material thereby generating a current large enough to form a bead of molten material on the part. The shielding gas 108 moves around the feed material 106 and helps to ensure the voltage is maintained as well as helps to protect the molten bead of material from exposure to potentially corrosive gases and moisture that can weaken the weld.

The nozzle design, with a tapered tip 102, is selected to increase the flow of shielding gas near the tip to help produce a more laminar flow around the feed material 106 and the molten bead. However, the open edge of the tip tends to create a turbulent flow 114 as the gas 108 exits the nozzle. Turbulent flow is less desirable because it can produce a lower quality weld. Accordingly, some designs have attempted to reduce the amount of turbulent flow at the tip of the nozzle. For example, some nozzles have attempted to improve the laminar flow affect by using discs or screens 120, as illustrated in Fig. 1B. The discs 120 help to increase the flow of the gas by further restricting the movement of the gas in the nozzle. This helps produce a more laminar flow around the exit tip of the nozzle and the feed material. The concept of producing a laminar flow is not new to 3-D printing of metallic parts. It is known that there is a better bead of material produced when the flow of the shielding gas is more laminar than turbulent. Accordingly, various designs, such as the screens, have been implemented to produce laminar flows around the feed material. Although the nozzle illustrated in Figs. 1A and 1B can be adapted for 3-D printing, it is not capable of producing two concentric flows of shielding gas in order to produce a laminar flow around the feed material.

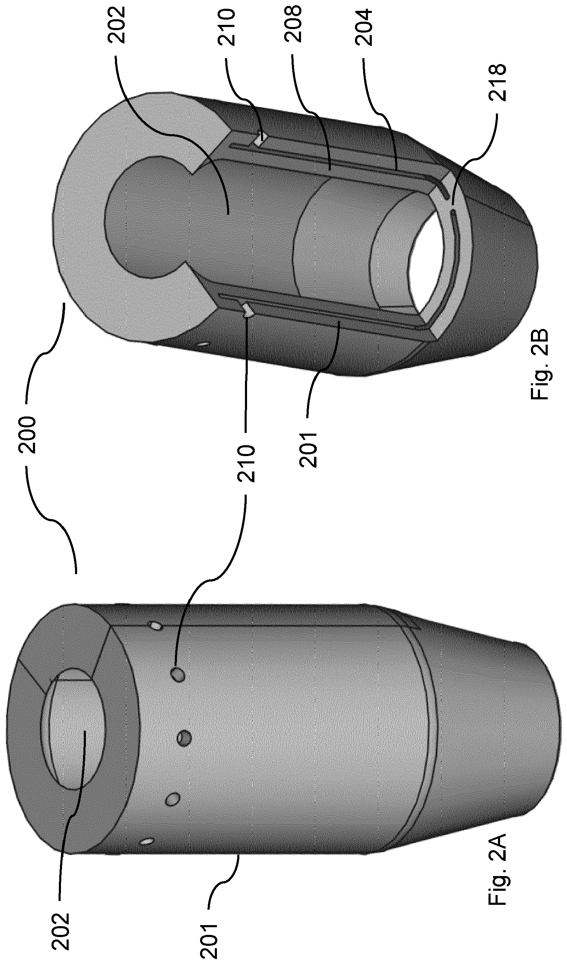

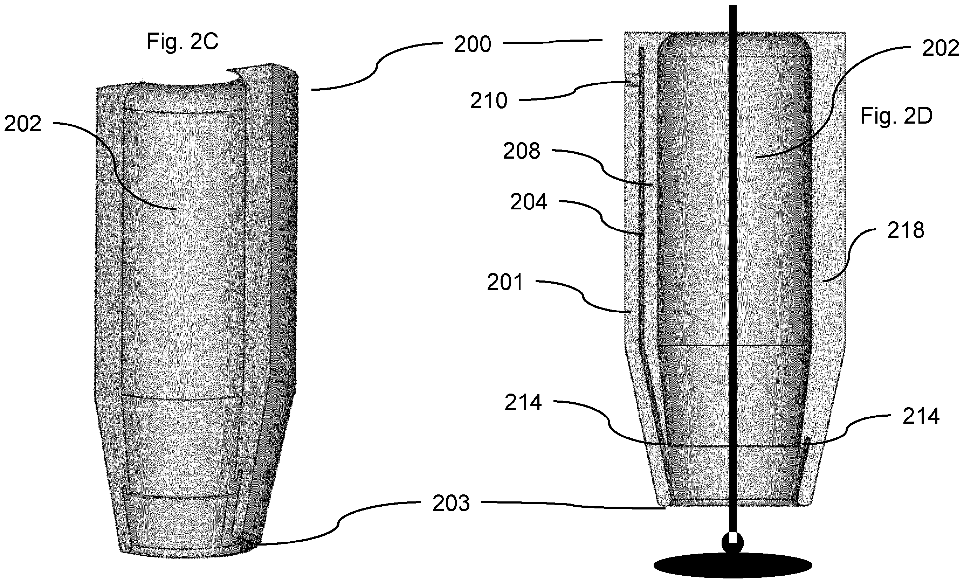

In some embodiments, nozzles may contain a high-pressure channel concentrically located with respect to a main central channel. Figs. 2A through 2D illustrate a high-pressure nozzle in accordance with an embodiment. The high-pressure nozzle 200 can be a cylindrical design with a generally straight outer wall 201 and a main central channel 202. The main central channel 202 can be smooth and configured to direct a lower-pressure shielding gas through the nozzle. In some embodiments, the exterior end of the nozzle can be tapered as well. However, in embodiments the nozzle 200 has an internal high-pressure fluid channel 204 that is positioned between the outer wall 201 of the nozzle and an inner wall 208, the inner wall forms a concentrically aligned second cylinder within the nozzle and forms the main central channel 202. The inner wall 208 can follow the contour of the outer wall 201 forming a space between the inner and outer walls creating the channel 204 that directs the high-pressure flow towards the central channel 202 near the bottom or exit point 203.

The internal high-pressure channel 204 can be fed a high-pressure shielding gas through wall diffusers or holes 210 that are circumferentially placed around the nozzle. The wall diffusers 210 can take on any shape or size such they allow for the shielding gas to move into the internal channel 204 of the nozzle 200. In other words, the wall diffusers 210 are through-holes that connect to the high-pressure internal channels.

In some embodiments, the length of the internal channel 204 extends to a location that is distal to the exit tip 203 of the nozzle. The setback position of the internal channel exit 214 can help to control the flow of the shielding gas as it exits the nozzle tip 203 such that the main shielding gas is contained or formed into a laminar flow by surrounding it with a high-pressure flow of shielding gas. As can be appreciated, the position of the high-pressure internal channel tip 214 can be in any desirable location set back from the exit tip 203 of the nozzle such that it encircles and contains the flow of the main or lower-pressure shielding gas. In some embodiments, the setback position can range up to about 1.5 cm from the exit tip 203 of the nozzle. In several embodiments, the inner wall 208 can be connected to the outer wall 201 by one or more support structures 218. The support structure 218 can run the entire length of the high-pressure internal channel 204 or can terminate just prior to the end or exit of the channel 214. This can effectively create multiple high-pressure internal channels 204 within the nozzle 200. As can be appreciated, in some embodiments the support structures 218 can correspond to each of the various wall diffusers or holes 210 in the nozzle, thus creating a larger number of individual channels 204 within the nozzle.

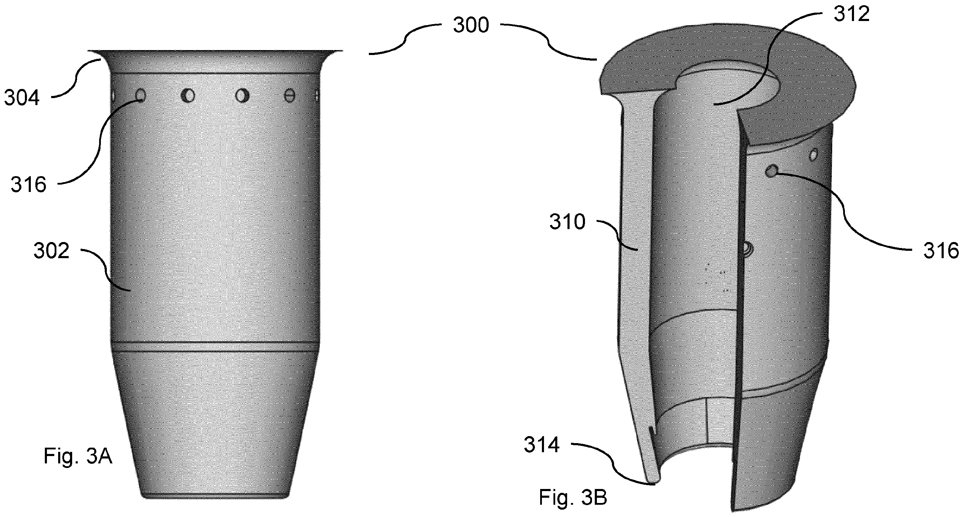

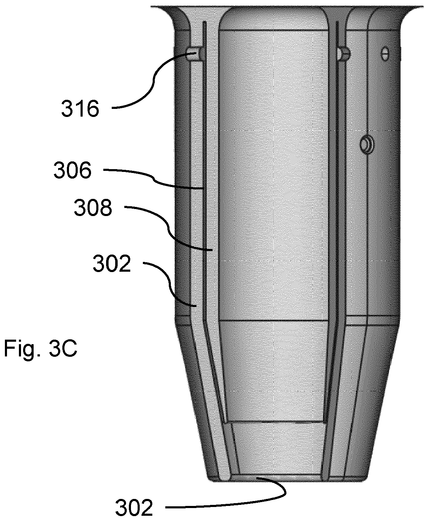

Figs. 3A through 3C illustrate an alternative embodiment of a nozzle 300 in which the outer wall 302 has an upper flanged component 304. The flanged component 304 can be a functional element that allows the nozzle to rest within a high-pressure gas housing (not shown). The housing can be used to generate a high-pressure shielding gas supply to the nozzle. Nozzles with a flanged component 300 can have an internal high-pressure channel 306 that is positioned between an inner wall 308 and the outer wall 302 to produce a high-pressure flow of shielding gas within the nozzle. Some embodiments of the flanged nozzle 300 can have one or more support structures 310 that connect the inner wall 308 and the outer wall 302 and help to move the high-pressure flow down the channel 306 into a central channel 312 of the nozzle 300. Accordingly, the high-pressure flow can help control the flow of a lower-pressure shielding gas along the central channel 312 creating a more laminar flow that exits the nozzle tip 314.

Additionally, nozzle 300 can have one or more different wall diffusers 316 positioned around the nozzle that connect the outer wall to the high-pressure internal channel 306. Although the nozzle 300 illustrates the position of the wall diffusers 316 in a specific location, it should be appreciated that the wall diffusers could be located at any location longitudinally along the length of the nozzle 300. Additionally, embodiments can have one or more configurations of wall diffusers 316 in various sizes and/or shapes or can have one or more circumferential rows of wall diffusers in the nozzle.

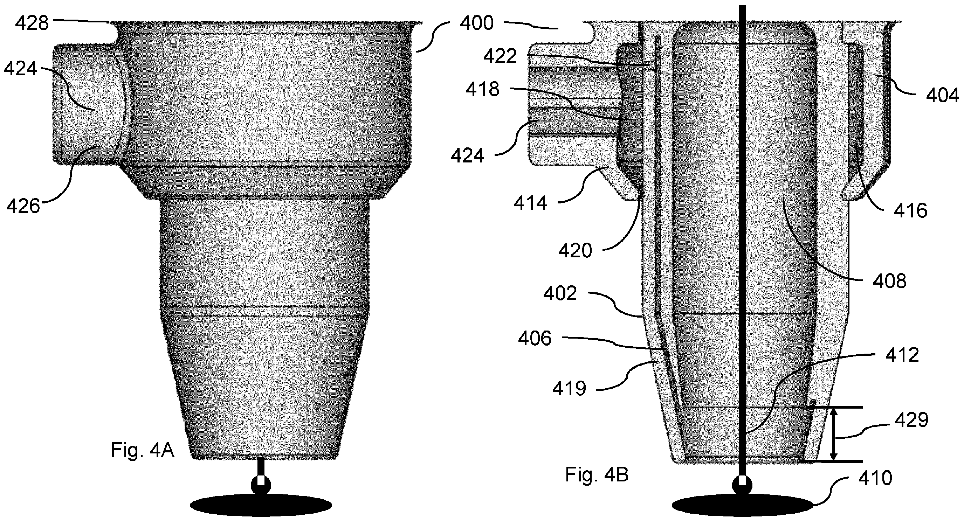

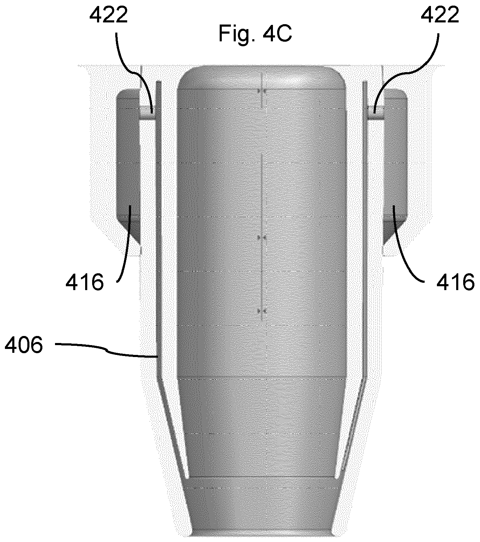

As can be appreciated, the wall diffusers described with respect to Figs. 2A through 2D can be used to generate and/or move a high-pressure shielding gas into the high-pressure internal channel(s) of the nozzle. As such it should be appreciated that various embodiments of the nozzle can be configured to cooperatively engage with an external housing that creates a high-pressure chamber for pushing shielding gas into the internal high-pressure channels. Figs. 4A and 4C illustrate a two-piece nozzle assembly in accordance with an embodiment. Fig. 4B and Fig. 4C show two different cross section plane views of the nozzle in Fig. 4A. The nozzle assembly 400 has a nozzle element 402 that is concentric to or sits inside of a housing 404. The nozzle element 402 can be configured with an internal high-pressure channel 406 that runs parallel to, and concentric with, a main central channel 408. The main central channel is configured to direct a first flow of shielding gas towards a printed part 410 and around the feed material 412. The distance 429 between the open end of the high-pressure channel 406 and the open end of the central channel 408 is about 8 mm.

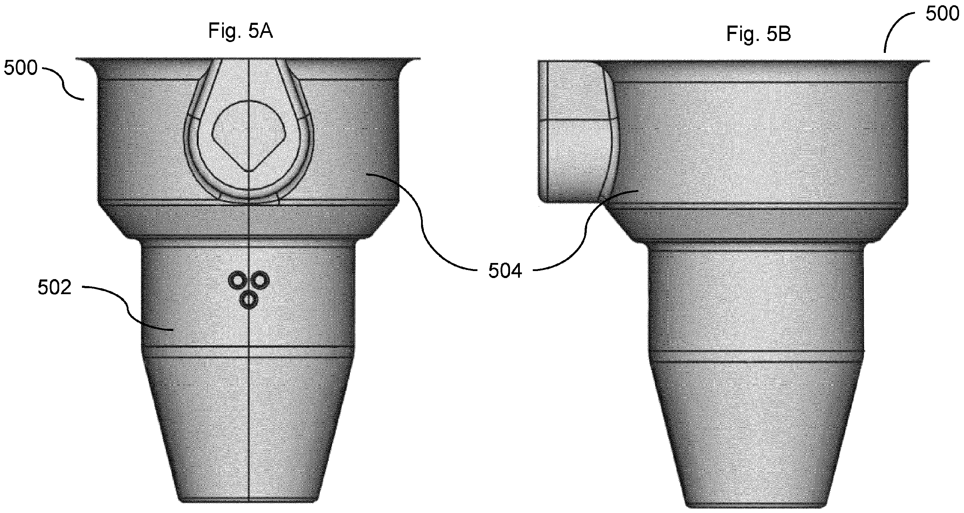

The external housing 404 can be a separate element that engages with the nozzle element 402. In embodiments, the housing 404 has an external wall 414 and an internal cavity 416 or space between the inner wall of the housing 418 and the external wall of the nozzle 419 element 402. The space thereby forms a cavity or pressure vessel by which pressure can build up before entering the internal high-pressure channel 406 of the nozzle 402. In certain embodiments, the housing element 404 forms a seal between the internal cavity 416 and the nozzle 402 such that the shielding gas does not escape through the connection seam 420, but rather is forced to enter the high-pressure internal channel 406 through the various wall diffusers 422. In various embodiments, the housing 404 can have an inlet 424 where the high-pressure shielding gas is fed into the pressure cavity 416. The inlet 424 can take on any suitable form and can be configured to connect to any suitable gas supply system. For example, as illustrated in Figs. 4A and 4B the inlet 424 can have a circular profile where the external surface 426 of the inlet 424 sits below the upper surface 428 of the assembly 400. Additionally, some embodiments can have an inlet that is configured with an external surface that is flush with the upper surface of the assembly, as shown in Figs. 5A and 5B. In several embodiments, the pressure cavity 416 (embodied as wall diffusers) can be connected with the internal high-pressure channel 406 via diffuser holes 422, as shown in Fig. 4C. The diffuser holes 422 may not be aligned in a same plane as the inlets 424. The diffuser holes 422 are offset from the inlets 424 such that the diffuser holes can diffuse better.

Although not specifically illustrated in previous figures 2A through 4C, it can be appreciated that the nozzles and/or nozzle assemblies can be configured to connect to any number of printing heads. In some such embodiments, the nozzle and/or nozzle assembly can be a press fit or can be configured to connect to another external component to subsequently connect the nozzle and/or nozzle assembly to the printing head. Additionally, some embodiments can be configured to connect to the printing head through a threaded connection. Accordingly, some embodiments can have a threaded section of the nozzle or nozzle assembly for interfacing with the printing head.

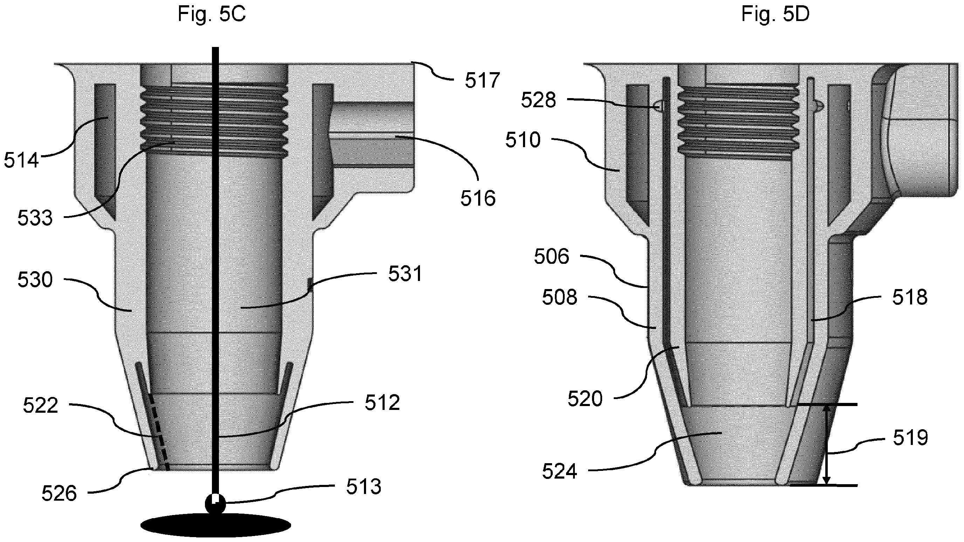

In several embodiments, the nozzle assembly can be manufactured to be a single piece assembly. In other words, the nozzle and the housing can be a made from a single piece of material rather than two separate components. Figs. 5C through 6D illustrate a single piece nozzle assembly in accordance with an embodiment. Figs. 5C through 5E illustrate cross sectional views of a nozzle assembly 500 where the nozzle 502 and the housing 504 are joined or made from a single piece of material. As such, it can be seen that the outer surface 506 of the outer wall 508 of the nozzle 502 is continuous with that of the outer wall of the housing 510. This can be advantageous for one or more reasons. For example, a nozzle assembly without a seam between the housing and the nozzle element can allow for greater pressures to be used without the loss of pressure at the seams. This can help to generate a more efficient high-pressure stream of shielding gas around a feed material 512 and molten bead 513.

Similar to the individual components, the inner wall of the housing 510 and the outer wall of the nozzle 508 form a cavity or chamber 514 that can be considered a pressure chamber for which shielding gas can build up pressure to be fed into the nozzle 502. In accordance with numerous embodiments, the shielding gas can be fed into the chamber 514 through an inlet 516. The inlet 516 can extend outwardly from the chamber 514 and be connected to a supply line of shielding gas. Additionally, it should be appreciated that the inlet can take on any desired configuration and/or design such that it is capable of directing the shielding gas into the chamber 514. In some embodiments the inlet 516 can have an upper portion 517 that is parallel to or flush with the top portion of the assembly 500. Such configuration merely represents an embodiment of the inlet design and it should be appreciated that the inlet can take on any suitable configuration.

In accordance with embodiments, the nozzle assembly 500 can have an internal high-pressure channel 518. The internal high-pressure channel 518 can be positioned between an inner wall of the nozzle 520 and the outer wall 508, thereby forming a space or channel that extends from an upper portion of the assembly to a setback point 522 within the main central channel 524 of the nozzle. The position of the setback point 522 is away from exit tip 526 of the nozzle and within the central channel 524 such that high pressure shielding gas traveling down the high-pressure channel 518 will interact with the lower pressure shielding gas in the main central channel 524. This interaction, prior to the lower pressure shielding gas exiting the exit tip 526 helps to ensure a more laminar flow of the lower pressure shielding gas around the feed material 512 and molten bead 513. The distance 519 between the open end of the high-pressure channel 518 and the open end of the central channel 524 is about 12 mm.

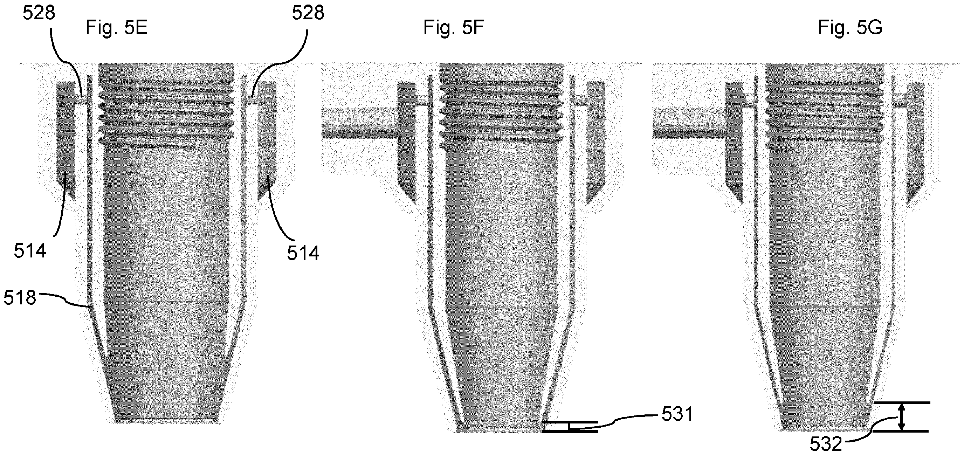

In embodiments of the nozzle assembly, the internal high-pressure channel 518 can be connected to the high-pressure chamber 514 through one or more diffuser holes 528. The diffuser holes 528 transect the outer wall of the nozzle and connect the chamber 514 with the internal channel 518. The diffuser holes 528 can be positioned at a location within the chamber 514 that allows for the high-pressure shielding gas to pass from the chamber 514 into the high-pressure channel 518. In some embodiments, the diffuser holes 528 can be positioned between support structure supports 530. As can be appreciated, the support structure supports 530 can maintain the spacing between the inner wall and the outer wall as well as form separate high-pressure channels 514 circumferentially surrounding the main central channel 524. In several embodiments, the diffuser holes 528 may not be aligned in a same plane as the inlets 516, as shown in Fig. 5E. The diffuser holes 528 can be offset from the inlets 516 for better gas flow.

As can be fully appreciated, the nozzle assembly and/or nozzle can be configured to connect to a printing head (not shown) in any number of methods. For example, the nozzle assembly 500 illustrated in Figs. 5C and 5G has a main central channel 524 with a straight portion 531 and a threaded portion 533. The threaded portion 533 can be of any desirable thread configuration such that it can be secured to a printing head. For example, the diameter, pitch, etc. of the threads can vary depending on the desired interface between the nozzle assembly 500 and the printing head.

Several embodiments select the distance between the open end of the high-pressure channel and the open end of the central channel to remove the spatter accumulated during printing. As shown in Fig. 5D, the distance 519 between the open end of the high-pressure channel and the open end of the central channel is about 12 mm. The 12 mm distance may be too far apart for the high-pressure channel and the contact tip to blow out the spatter on the end of the nozzle. Fig. 5F illustrates a single piece nozzle assembly in accordance with an embodiment of the invention. The distance 531 between the open end of the high-pressure channel and the open end of the central channel is about 2 mm. The 2 mm distance is able to blow out most of the spatter on the main nozzle tip. However, the distance may be too close for the high-pressure channel and the contact tip such that the molten material can be accumulated on the tip instead of being cleared up.

A number of embodiments select the distance between the open end of the high-pressure channel and the open end of the central channel to be between about 2 mm and about 12 mm. Fig. 5G illustrates a single piece nozzle assembly in accordance with an embodiment of the invention. The distance 532 between the open end of the high-pressure channel and the open end of the central channel is about 5 mm.

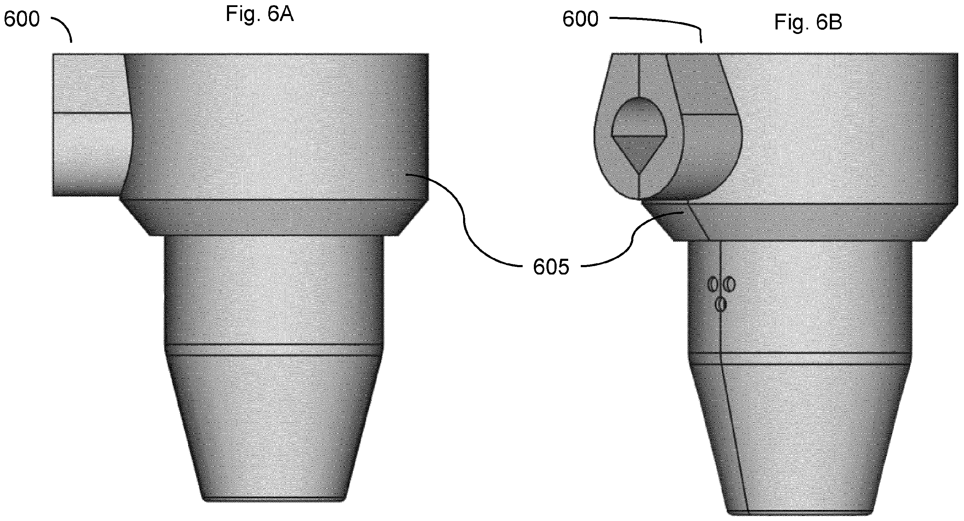

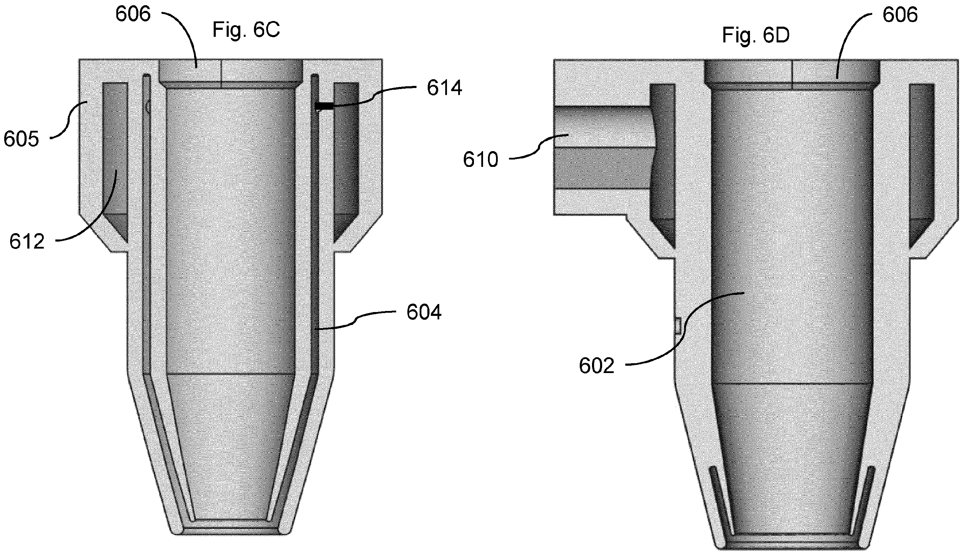

In contrast to a threaded connection, some embodiments can include a slip connection or a nozzle that is a press fit onto the printing head. Figs. 6A through 6D illustrate a nozzle assembly with slip connection in accordance with an embodiment. The nozzle assembly 600 has a main central channel 602 that is concentrically located with a high-pressure channel 604 and a high-pressure housing 605. The central channel 602 can have a recessed upper portion 606 that has a larger diameter than the lower portion of the channel. The recessed portion 606 can be configured to engage with a printing head. The nozzle assembly in Figs. 6A through 6D can have features such as an inlet 610 connected to a high-pressure chamber that surrounds the nozzle to supply the high-pressure channel with a high-pressure shielding gas. Additionally, the chamber 612 and the high-pressure channel 604 can be connected by one or more different wall diffusers 614 circumferentially disposed in the nozzle. The chamber 605 can transmit or move the shielding gas into the internal high-pressure channel 604.

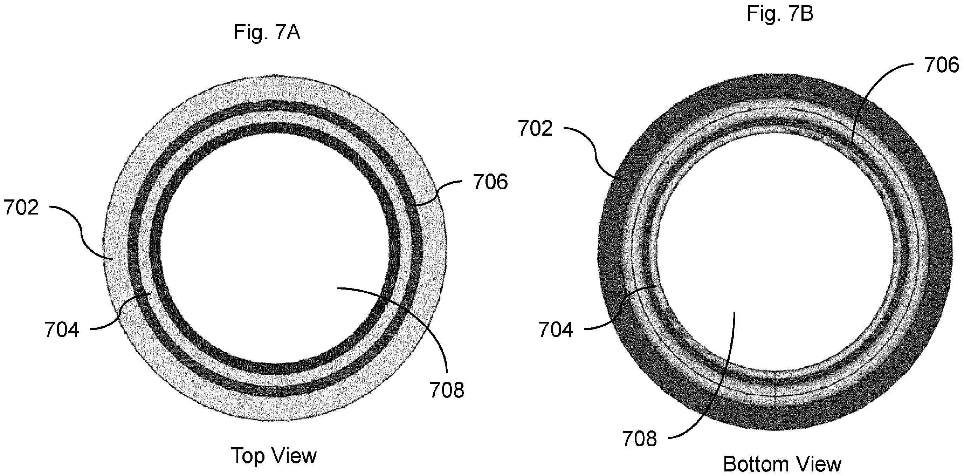

As can be appreciated, embodiments of the nozzle and/or nozzle assembly can have a cylindrical shape with a circular cross section. Accordingly, embodiments of the nozzle and/or nozzle assembly can have a concentric or coaxial cylinder where the main cylinder is the outer most cylinder forming the main structure and the secondary cylinder is positioned within the inner diameter of the main cylinder. Figs. 7A and 7B illustrate axial views of a nozzle and/or nozzle assembly in accordance with various embodiments. It can be seen that the cylinder 702 is illustrative of the outer wall of the nozzle and/or nozzle assembly. The internal cylinder 704 illustrates the position of the inner wall or the wall that forms a portion of the internal high-pressure channel. The space between the concentrically aligned cylinders 706 is the internal high-pressure channel that is concentric to the two cylinders. This helps to ensure that the high-pressure shielding gas completely surrounds the lower pressure shielding gas that would be passed through the main central channel 708 of the nozzle and/or nozzle assembly.

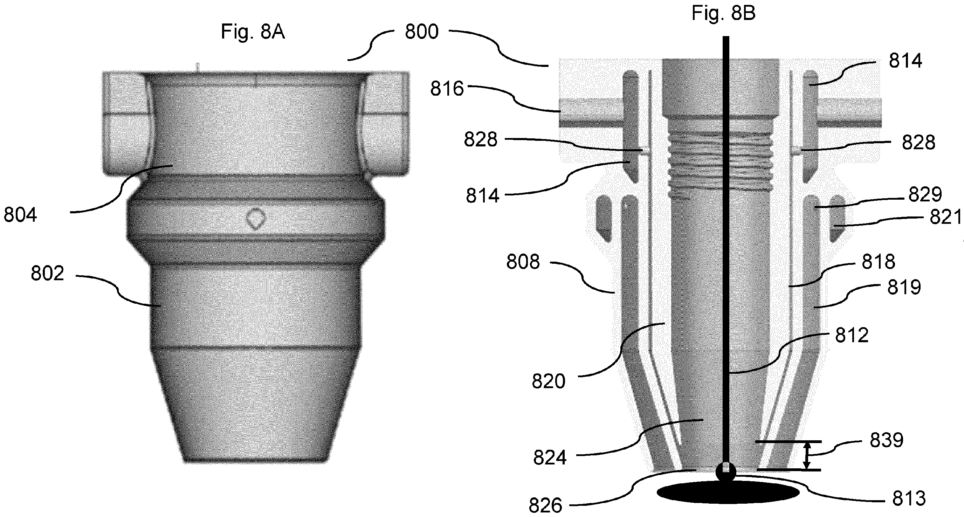

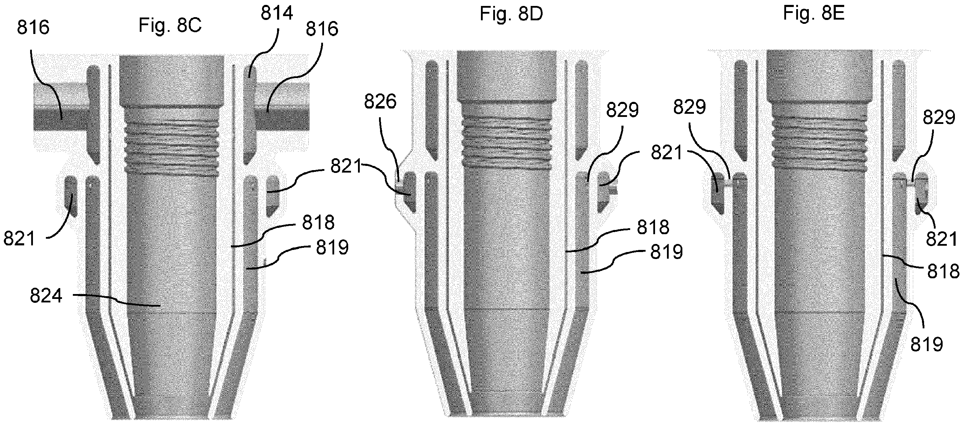

Many embodiments implement two cups in nozzles to expand gas coverage. In several embodiments, the nozzles can have at least one pressure chamber for high-pressure internal channels and for outer channels. Each pressure chamber is connected with at least one inlet. Figs. 8A through 8E illustrate a two-cup nozzle with internal high-pressure channels in accordance with an embodiment of the invention. Figs. 8B through 8E illustrate the same nozzle shown in Fig. 8A. Figs. 8B through 8E illustrate a different cross section view respectively of the nozzle in Fig. 8A. Figs. 8A through 8E illustrate a nozzle assembly 800 where the nozzle 802 and the housing 804 are joined or made from a single piece of material. The nozzle assembly 800 can have a central channel 824, an internal high-pressure channel 818, and an outer channel 819. The internal high-pressure channel 818 and the outer channel 819 are positioned between an inner wall 820 and the outer wall 808 of the nozzle. The open ends of the inner internal high-pressure channel 818 are away from exit tip 826 of the central channel 824 and within the central channel 824 such that high pressure shielding gas traveling down the high-pressure channel 818 interacts with the lower pressure shielding gas in the central channel 824. This interaction, prior to the lower pressure shielding gas exiting the exit tip 826 helps to ensure a more laminar flow of the lower pressure shielding gas around the feed material 812 and molten bead 813. The distance 839 between the open end of the high-pressure channel 818 and the open end of the central channel 824 is about 5 mm. The open ends of the outer channel 819 are aligned with the exit tip 826 of the nozzle.

The nozzle assembly 800 has pressure chamber (or wall diffusers) 814 to provide storage and transfer gas to the high-pressure gas channels 818. This can help to increase the amount of gas flow into the inner internal high-pressure channels 818. The cavity or chamber 814 can be a pressure chamber for shielding gas to build up pressure to be fed into the internal high-pressure channels 818. The shielding gas can be fed into the chamber 814 through inlets 816. The inlet 816 can extend outwardly from the chamber 814 and be connected to a supply line of shielding gas. The inlet can take on any desired configuration and/or design such that it is capable of directing the shielding gas into the chamber 814.

In various embodiments, the inner internal high-pressure channels 818 can be connected to the high-pressure chamber or wall diffuser 814 through one or more diffuser holes 828 as shown in Fig. 8B. The diffuser holes 828 transect the outer wall of the nozzle and connect the chamber 814 with the internal channel 818. The diffuser holes 828 can be positioned at a location within the chamber 814 that allows for the high-pressure shielding gas to pass from the chamber 814 into the high-pressure channel 818. The outer channel 819 of the secondary cup can connect with an outer pressure chamber 821. Shielding gas can be fed into the pressure chamber 821 through the inlets 826 as shown in Fig. 8D. The pressure chamber 821 can be connected to the outer channels 819 via diffuser holes 829 as shown in Fig. 8E. The inlets 816 for the pressure chamber 814 and the inlets 826 for the outer pressure chamber 821 are independent and have their own fittings. The different inlet fittings are about 90 degrees apart from each other. The diffuser holes 828 for the pressure chamber 814 are offset from the inlets 816. The diffuser holes 829 for the outer pressure chamber 821 are offset from the inlets 826. The offset diffuser holes from the inlets enable better gas diffusion from the chamber. The offset diffuser holes and inlets can be seen in the different cross section plane views in Figs. 8B through 8E.

The shielding gas in the inner high-pressure channels 818 and the shielding gas in the outer channels 819 can be flown at the same and/or different flow rate. The ability to have different flow rate in the channels enables better control of spatter build up in the nozzle. The inlets 816 to the chambers 814 can be positioned about 180 degrees apart from each other to provide access to various types of torches. The inlets 826 to the outer chambers 821 can be positioned about 180 degrees apart from each other to provide access to various types of torches. The diameter of the inlets to the inner and outer high-pressure channels can be varied to achieve the desired gas flow. The secondary cylindrical cup that forms the outer channels 819 can have varied diameters to reduce spatter buildup. Examples of the outer cup diameter can vary from about 25 mm to about 35 mm. In some embodiments, the diameter of the secondary cylindrical cup can be changed to modify gas coverage. In certain embodiments, the wall thickness can be changed in order to reduce the weight of the nozzle. In various embodiments, the two-cup nozzle can have a pressure in the high-pressure channels 818 and/or in the outer channels 819 from about 20 psi to about 200 psi; or lower than about 20 psi; or lower than about 30 psi; or higher than about 200 psi. The blowout pressure can be applied to the nozzle at various time intervals.

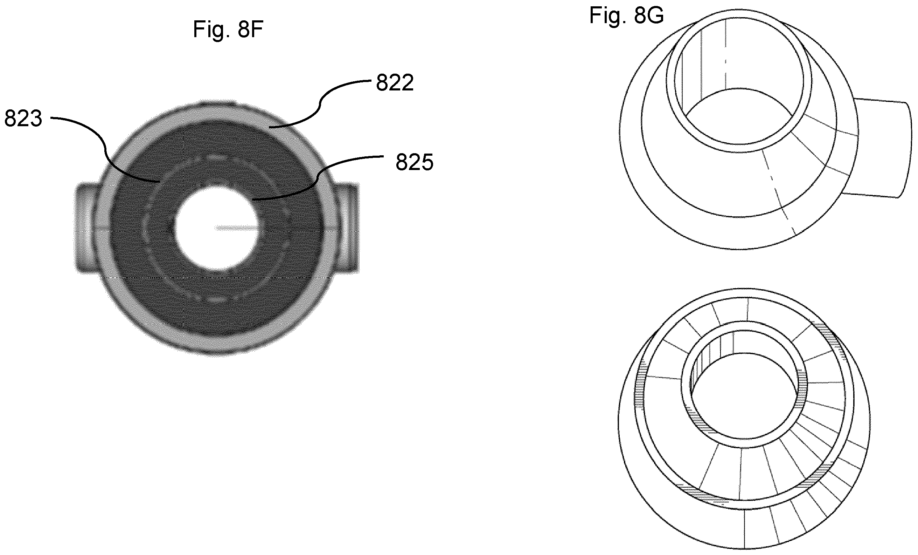

In many embodiments, two-cup nozzles can have a cylindrical shape with a circular cross section. In some embodiments, the nozzle can have a concentric or coaxial cylinder where the secondary or outer cup is the outer most cylinder forming the secondary channels and the inner cup is positioned within the inner diameter of the outer cup and forms the inner channels. Fig. 8F illustrates axial views of a two-cup nozzle in accordance with an embodiment. The external cylinder or the outer cylinder 822 is illustrative of the secondary cup the nozzle. The inner cylinder 825 illustrates the inner cup of the nozzle. The internal cylinder 823 illustrates the internal cup of the nozzle. The space between the concentrically aligned outer cylinder 822 and the internal cylinder 823 forms the outer channel. The space between the concentrically aligned internal cylinder 823 and the inner cylinder 825 forms the high-pressure channels. The space within the inner cylinder 825 forms the central channel.

Fig. 8G illustrates a single cup nozzle and a two-cup nozzle in accordance with an embodiment of the invention. The single cup nozzle can have high-pressure channels formed surrounding the main channels. The two-cup nozzle can have high-pressure channels formed surrounding the main channels, and the outer channel formed exterior to the high-pressure channels and the main channels.

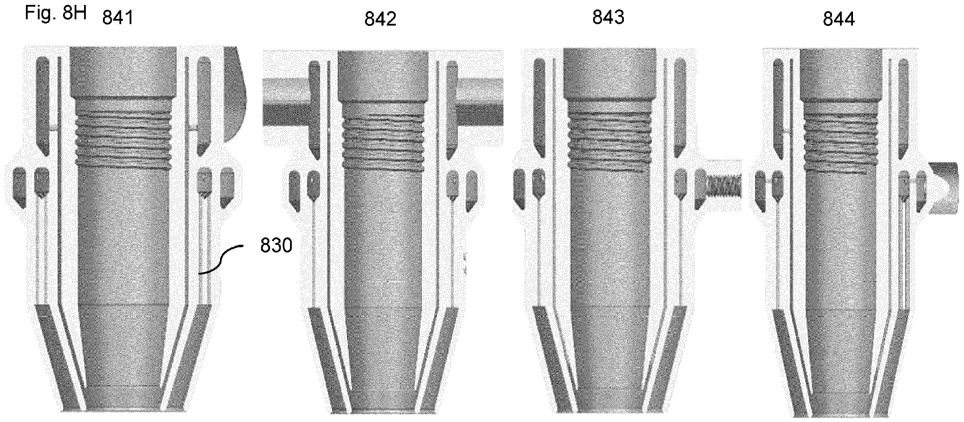

In several embodiments, diffusers can be added to the outer channels. The diffusers in accordance with some embodiments can modify the gas flow to be less turbulent when exiting the channels. In certain embodiments, the diffuser can include a series of rings in the outer cup. Each ring comprises a plurality of holes. The holes can have an average diameter of about 1.5 mm; or less than about 1.5 mm; or about greater than about 1.5 mm. Fig. 8H illustrates a cross section view of a two-cup nozzle with a diffuser in accordance with an embodiment of the invention. The diffuser 830 can be positioned inside the outer channels. Elements 841, 842, 843, and 844 illustrate different cross section views of the two-cup nozzle with a diffuser. Element 841 shows a cross section view of the diffuser holes of the internal high-pressure channels. Element 842 shows a cross section view of the inlets for the internal high-pressure channels. Element 843 shows a cross section view of the inlets for the outer channels. Element 844 shows a cross section view of the diffuser holes for the outer cup. As can be seen in elements 841, 842, 843, and 844, the inlets for the wall diffuser of the internal high-pressure channels and the inlets of the wall diffuser of the outer channels are offset, the diffuser holes of the internal high-pressure channels and the diffuser holes of the out channels are offset as well.

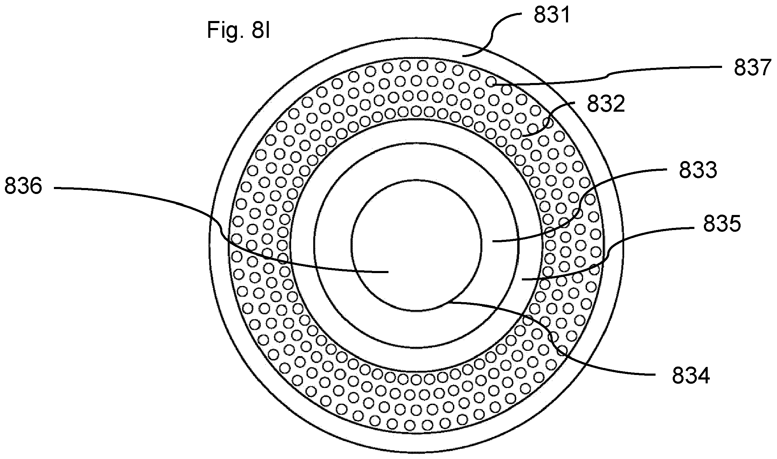

Fig. 8I illustrates a bottom view of a two-cup nozzle with a 4-ring diffuser in accordance with an embodiment. The internal high-pressure channels 833 can be formed between the inner cylinder 834 and the internal cylinder 835. The central channel 836 can be located within the inner cylinder 834. The outer channels 837 can be formed between the outer cylinder 831 and the internal cylinder 835. A 4-ring diffuser 832 can be positioned inside the outer channels 837 to modify gas flow. In a number of embodiments, diffusers can be positioned in the inner rings as well (not shown in the figure).

In many embodiments, the nozzles can be moved further away from the printed object relative to the contact tip face to reduce the amount of spatter that can reach the nozzle. The nozzle in accordance with a number of embodiments can be a distance back from the contact tip face. In some embodiments, the distance can be from about 2 mm to about 15 mm; or about 2 mm; or about 6 mm; or about 8 mm; or about 10 mm; or about less than about 2 mm; or about greater than about 15 mm.

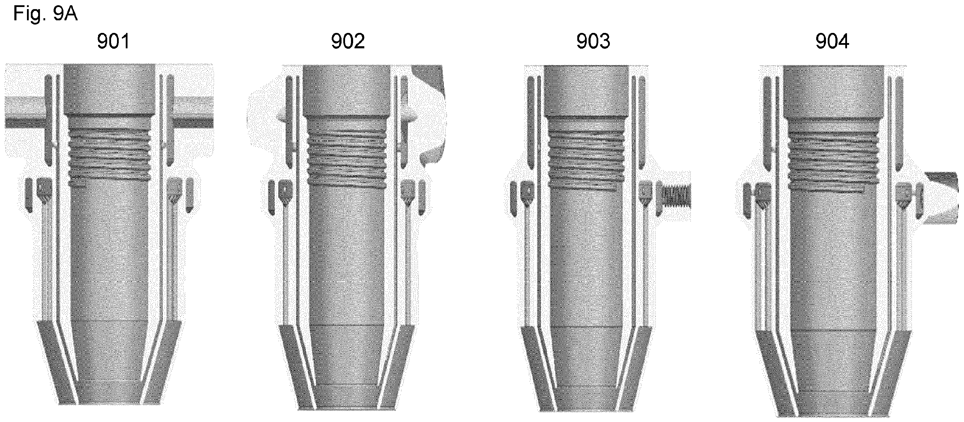

In order to move the nozzle behind the contact tip, the distance of the cone can be decreased. Fig. 9A illustrates a two-cup nozzle with a shortened cone in accordance with an embodiment of the invention. Elements 901, 902, 903, and 904 illustrate different cross section plane views of the two-cup nozzle with a diffuser. Element 901 shows a cross section view of the inlets for the internal high-pressure channels. Element 902 shows a cross section view of the diffuser holes for the internal high-pressure channels. Element 903 shows a cross section view of the inlets for the outer channels. Element 904 shows a cross section view of the diffuser holes for the outer channels. As shown in Fig. 9A, the length of the cone is shortened. However, the shorter distance of the cone may result in a more severe angle of the cone, which can lead to more turbulence when the shielding gas exits the cone.

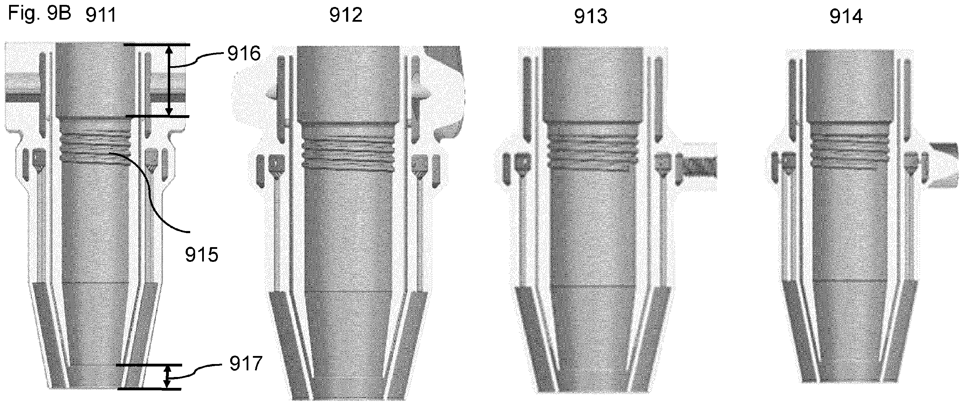

In contrast, some embodiments keep the same length of the cone and shift the entire nozzle back by shifting the thread location. In several embodiments, the thread counts can be kept the same. Fig. 9B illustrates a two-cup nozzle with shifted thread location in accordance with an embodiment of the invention. The shape of the cone of the nozzle shown in Fig. 9B is preserved. Elements 911, 912, 913, and 914 illustrate different cross section plane views of the two-cup nozzle with a diffuser. Element 911 shows a cross section view of the inlets for the internal high-pressure channels. Element 912 shows a cross section view of the diffuser holes for the internal high-pressure channels. Element 913 shows a cross section view of the inlets for the outer channels. Element 914 shows a cross section view of the diffuser holes for the outer channels. The shifted thread location 915 are able to shift the nozzle back without changing the geometrical shape. The nozzle has a 3-ring diffuser with a secondary cup of a diameter of about 28 mm. The nozzle shown in Fig. 9B has a cutback distance 916 of about 4 mm behind the contact tip face. The distance 917 between the open end of the high-pressure channel and the open end of the central channel is about 5 mm. The cone angle is about 20 degrees.

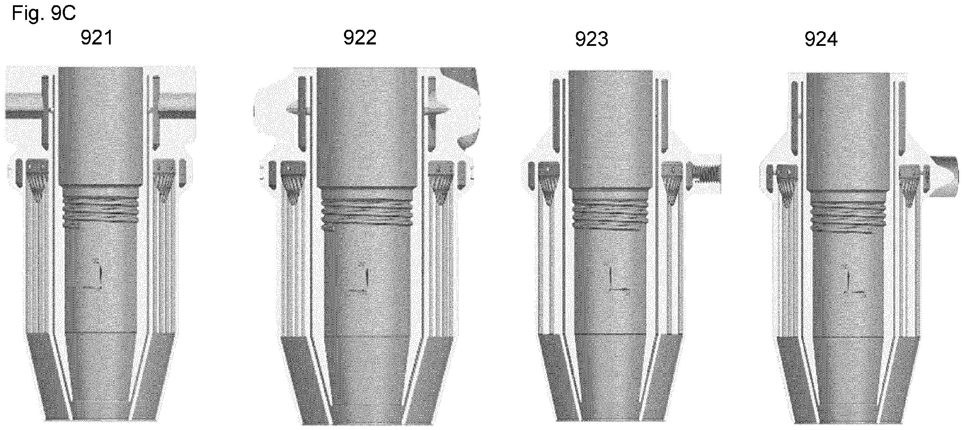

Fig. 9C illustrates a two-cup nozzle with shifted thread location in accordance with an embodiment of the invention. Elements 921, 922, 923, and 924 illustrate different cross section plane views of the two-cup nozzle with a diffuser. Element 921 shows a cross section view of the inlets for the internal high-pressure channels. Element 922 shows a cross section view of the diffuser holes for the internal high-pressure channels. Element 923 shows a cross section view of the inlets for the outer channels. Element 924 shows a cross section view of the diffuser holes for the outer channels. The nozzle has a 4-ring diffuser with a secondary cup of a diameter of about 32 mm. The nozzle has a cutback distance of about 6 mm behind the contact tip face. The distance between the open end of the high-pressure channel and the open end of the central channel is about 5 mm. The cone angle is about 20 degrees.

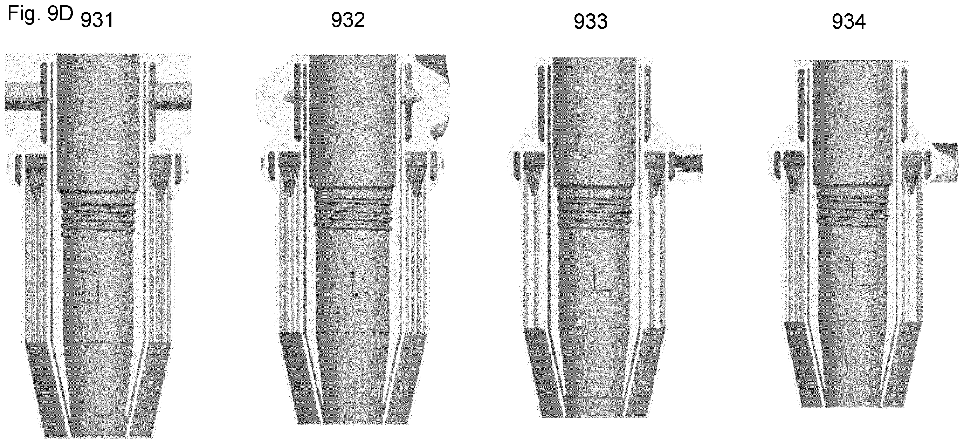

Fig. 9D illustrates a two-cup nozzle with shifted thread location in accordance with an embodiment of the invention. Elements 931, 932, 933, and 934 illustrate different cross section plane views of the two-cup nozzle with a diffuser. Element 931 shows a cross section view of the inlets for the internal high-pressure channels. Element 932 shows a cross section view of the diffuser holes for the internal high-pressure channels. Element 933 shows a cross section view of the inlets for the outer channels. Element 934 shows a cross section view of the diffuser holes for the outer channels. The nozzle has a 4-ring diffuser with a secondary cup of a diameter of about 32 mm. The nozzle has a cutback distance of about 8 mm behind the contact tip face. The distance between the open end of the high-pressure channel and the open end of the central channel is about 5 mm. The cone angle is about 20 degrees.

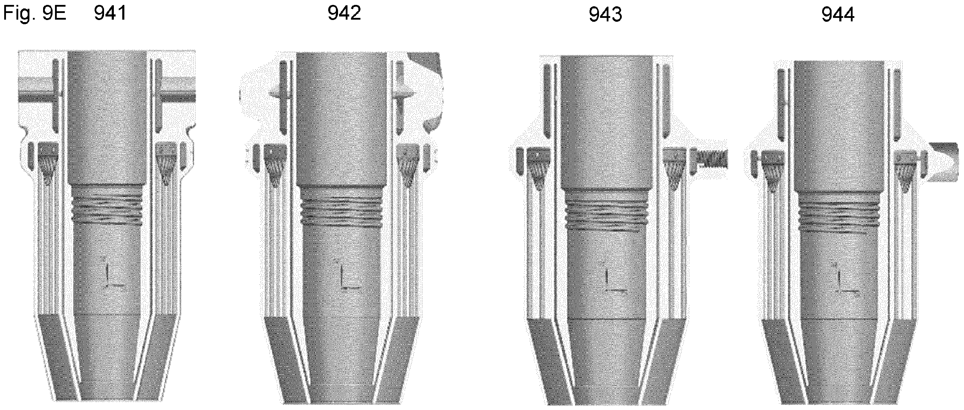

Fig. 9E illustrates a two-cup nozzle with shifted thread location in accordance with an embodiment of the invention. Elements 941, 942, 943, and 944 illustrate different cross section plane views of the two-cup nozzle with a diffuser. Element 941 shows a cross section view of the inlets for the internal high-pressure channels. Element 942 shows a cross section view of the diffuser holes for the internal high-pressure channels. Element 943 shows a cross section view of the inlets for the outer channels. Element 944 shows a cross section view of the diffuser holes for the outer channels. The nozzle has a 4-ring diffuser with a secondary cup of a diameter of about 32 mm. The nozzle has a cutback distance of about 10 mm behind the contact tip face. The distance between the open end of the high-pressure channel and the open end of the central channel is about 5 mm. The cone angle is about 20 degrees.

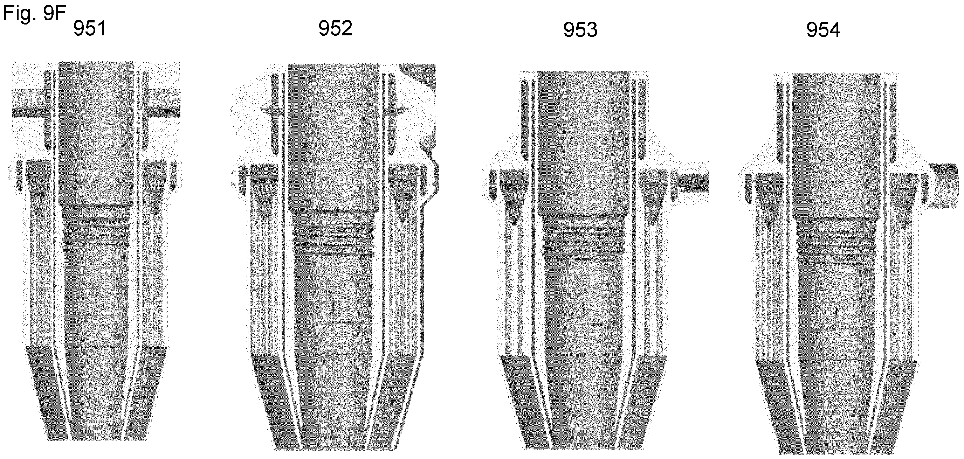

Fig. 9F illustrates a two-cup nozzle with shifted thread location in accordance with an embodiment of the invention. Elements 951, 952, 953, and 954 illustrate different cross section plane views of the two-cup nozzle with a diffuser. Element 951 shows a cross section view of the inlets for the internal high-pressure channels. Element 952 shows a cross section view of the diffuser holes for the internal high-pressure channels. Element 953 shows a cross section view of the inlets for the outer channels. Element 954 shows a cross section view of the diffuser holes for the outer channels. The nozzle has a 5-ring diffuser with a secondary cup of a diameter of about 32 mm. The additional diffuser aims to further slowdown the shield gas flow in the secondary cup before it exits the nozzle. The nozzle has a cutback distance of about 10 mm behind the contact tip face. The distance between the open end of the high-pressure channel and the open end of the central channel is about 5 mm. The cone angle is about 20 degrees.

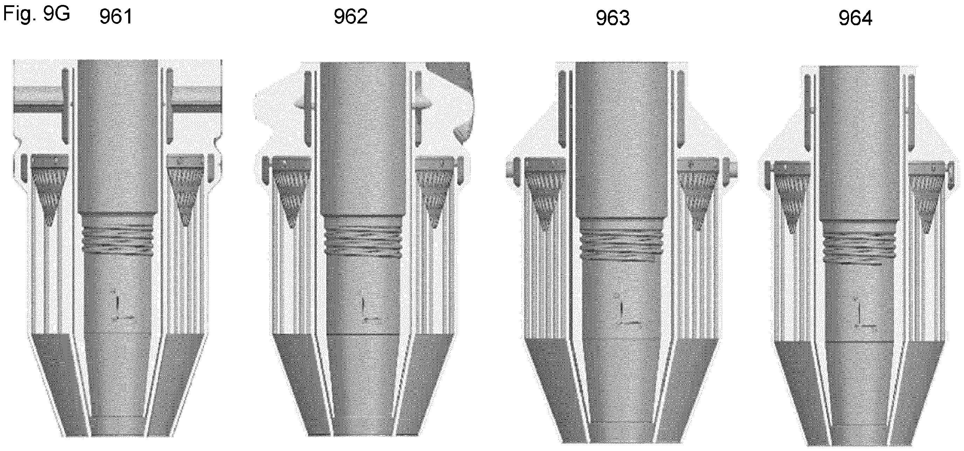

Fig. 9G illustrates a two-cup nozzle with shifted thread location in accordance with an embodiment of the invention. Elements 961, 962, 963, and 964 illustrate different cross section plane views of the two-cup nozzle with a diffuser. Element 961 shows a cross section view of the inlets for the internal high-pressure channels. Element 962 shows a cross section view of the diffuser holes for the internal high-pressure channels. Element 963 shows a cross section view of the inlets for the outer channels. Element 964 shows a cross section view of the diffuser holes for the outer channels. The nozzle has a 6-ring diffuser with a secondary cup of a diameter of about 32 mm. The additional diffuser aims to slowdown the shield gas flow more in the secondary cup before it exits the nozzle. The nozzle has a cutback distance of about 10 mm behind the contact tip face. The distance between the open end of the high-pressure channel and the open end of the central channel is about 5 mm. The cone angle is about 20 degrees.

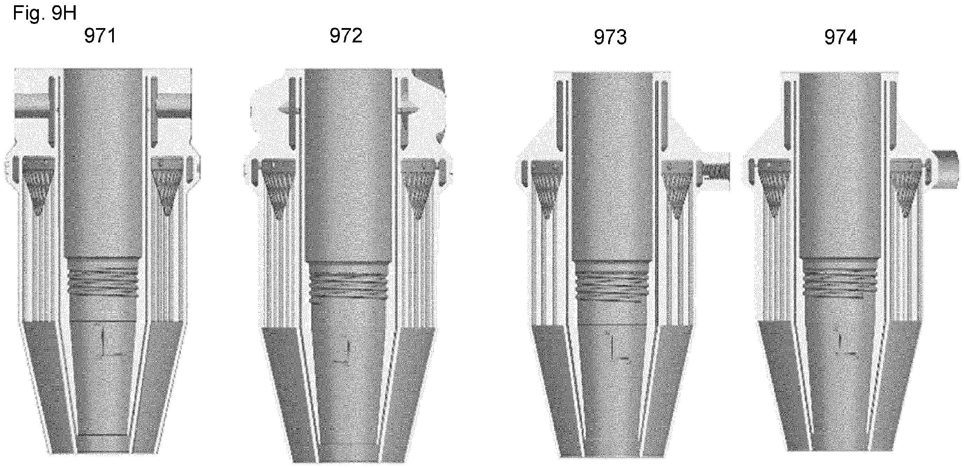

Fig. 9H illustrates a two-cup nozzle with shifted thread location in accordance with an embodiment of the invention. Elements 971, 972, 973, and 974 illustrate different cross section plane views of the two-cup nozzle with a diffuser. Element 971 shows a cross section view of the inlets for the internal high-pressure channels. Element 972 shows a cross section view of the diffuser holes for the internal high-pressure channels. Element 973 shows a cross section view of the inlets for the outer channels. Element 974 shows a cross section view of the diffuser holes for the outer channels. The nozzle has a 6-ring diffuser with a secondary cup of a diameter of about 32 mm. The nozzle has a cutback distance of about 10 mm behind the contact tip face. The distance between the open end of the high-pressure channel and the open end of the central channel is about 5 mm. The cone angle is about 15 degrees. The decrease of the cone angle may increase the length of the nozzle.

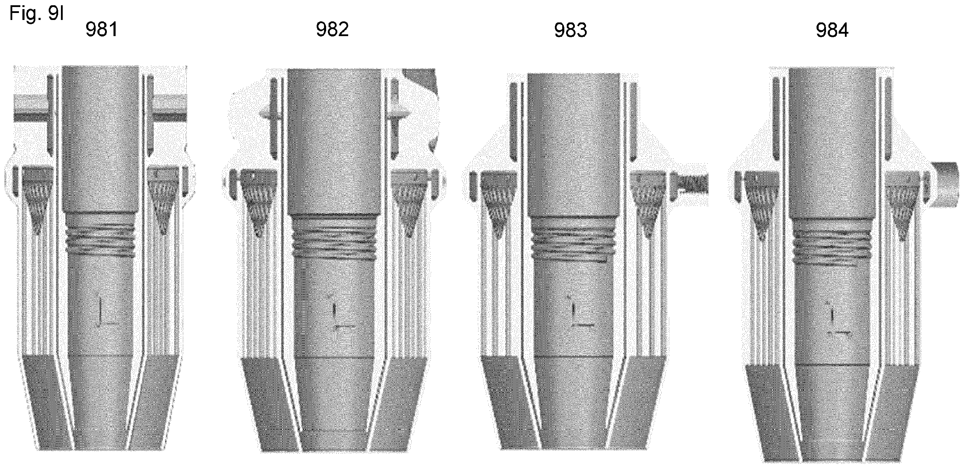

Fig. 9I illustrates a two-cup nozzle with shifted thread location in accordance with an embodiment of the invention. Elements 981, 982, 983, and 984 illustrate different cross section plane views of the two-cup nozzle with a diffuser. Element 981 shows a cross section view of the inlets for the internal high-pressure channels. Element 982 shows a cross section view of the diffuser holes for the internal high-pressure channels. Element 983 shows a cross section view of the inlets for the outer channels. Element 984 shows a cross section view of the diffuser holes for the outer channels. The nozzle has a 6-ring diffuser with a secondary cup of a diameter of about 34 mm. The nozzle has a cutback distance of about 10 mm behind the contact tip face. The distance between the open end of the high-pressure channel and the open end of the central channel is about 5 mm. The cone angle is about 15 degrees. The decrease of the cone angle may increase the length of the nozzle.

Although Fig. 9A - Fig. 9I illustrate nozzles with various configurations such as (but not limited to) diffusers, cutback distances, distances between the open end of high-pressure channels and the open end of central channels, cone angles, shifted thread locations, it can be appreciated that any variety of nozzle configurations can be utilized for wire-based additive manufacturing and/or wire arc additive manufacturing as appropriate to the requirements of specific applications in accordance with various embodiments of the invention.

Although not specifically illustrated in previous figures 8A through 9I, it can be appreciated that the nozzles and/or nozzle assemblies can be configured to connect to any number of printing heads. In some such embodiments, the nozzle and/or nozzle assembly can be a press fit or can be configured to connect to another external component to subsequently connect the nozzle and/or nozzle assembly to the printing head. Additionally, some embodiments can be configured to connect to the printing head through a threaded connection. Accordingly, some embodiments can have a threaded section of the nozzle or nozzle assembly for interfacing with the printing head. Several embodiments can be configured to include a slip connection or a nozzle that is a press fit onto the printing head.

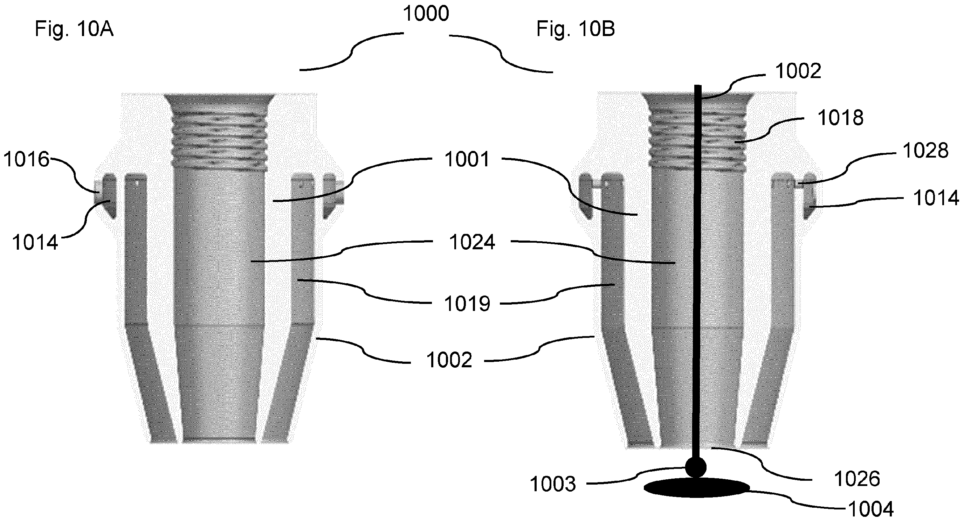

Many embodiments implement two cups in nozzles to expand gas coverage. Two-cup nozzles can be fabricated such as (but not limited to) printed in one-piece. The inner cup can be printed in a single piece, and the outer cup can be printed in a single piece. Post fabrication treatment such as (but not limited to) machining and/or heat treatment can be applied to the nozzles to achieve desired geometries, surface finishes, and/or mechanical properties. The inner cup and the outer cup can be fitted and assembled after printing. The inner and outer cup should form a seal such that no gas leakage should affect the flow of shielding gases in central channels and in outer channels. Figs. 10A through 10B illustrate a single piece two-cup nozzle in accordance with an embodiment of the invention. Figs. 10A through 10B illustrate different cross section views of the nozzle. Nozzle assembly 1000 where the inner cup 1001 and the outer cup 1002 of the nozzle is respectively made from a single piece of material. The outer cup 1002 surrounds the inner cup 1001 but may not cover the inner cup 1001 completely in longitudinal distance. The nozzle assembly 1000 can have a central channel 1024 and an outer channel 1019. The outer channel 1019 is positioned between the inner cup 1001 and the outer cup 1002 of the nozzle. The central channel 1024 is formed inside the inner cup 1001. The inner cup 1001 can have a flanged top or a flat top on the end that connects with a printing torch. The open ends of the outer channel 1019 are aligned with the exit tip 1026 of the nozzle. Metallic wires 1002 can be fed through the central channel 1024. The wire is melted and forms molten beads 1003 at the exit tip 1026 of the nozzle. The molten beads can be deposited on a substrate 1004.

The nozzle assembly 1000 has pressure chamber (or wall diffusers) 1014 to provide storage and transfer gas to the outer channels 1019. This can help to increase the amount of gas flow into the outer channels 1019. The cavity or chamber 1014 can be a pressure chamber for shielding gas to build up pressure to be fed into the outer channels 1019. The shielding gas can be fed into the chamber 1014 through inlets 1016. The inlet 1016 can extend outwardly from the chamber 1014 and be connected to a supply line of shielding gas. The inlet can take on any desired configuration and/or design such that it is capable of directing the shielding gas into the chamber 1014.

In various embodiments, the outer channels 1019 can be connected to the chamber or wall diffuser 1014 through one or more diffuser holes 1028. The diffuser holes 1028 can be positioned on the flange of the inner cup 1001 and transect the inner cup walls and connect the chamber 1014 with the outer channels 1019. The diffuser holes 1028. The diffuser holes 1028 can be positioned at a location within the chamber 1014 that allows for the high-pressure shielding gas to pass from the chamber 1014 into the outer channels 1019. The diffuser holes 1028 for the pressure chamber 1014 are offset from the inlets 1016. The offset diffuser holes from the inlets enable better gas diffusion from the chamber.

The shielding gas in central channels 1024 and the shielding gas in the outer channels 1019 can be flown at the same and/or different flow rate. The ability to have different flow rate in the channels enables better control of spatter build up in the nozzle. The inlets 1016 to the chambers 1014 can be positioned about 180 degrees apart from each other to provide access to various types of torches. The diameter of the inlets to the inner and outer high-pressure channels can be varied to achieve the desired gas flow. In various embodiments, the two-cup nozzle can have a pressure in the outer channels 1019 from about 20 psi to about 200 psi; or lower than about 20 psi; or higher than about 200 psi.

The outer cup that forms the outer channels 1019 can have varied diameters to reduce spatter buildup. Examples of the outer cup diameter can vary from about 25 mm to about 35 mm. In some embodiments, the diameter of the secondary cylindrical cup can be changed to modify gas coverage. In certain embodiments, the wall thickness can be changed in order to reduce the weight of the nozzle.

The thread 1018 on the distal end of the nozzle can connect with printing heads. Several embodiments shift the thread location relative to the rest of the nozzle to meet different fitting requirements. Many embodiments keep the same thread counts and/or thread geometries. Although nozzles in Fig. 10A and Fig. 10B have thread, it can be appreciated that nozzles can include a slip connection to be fitted onto printing heads.

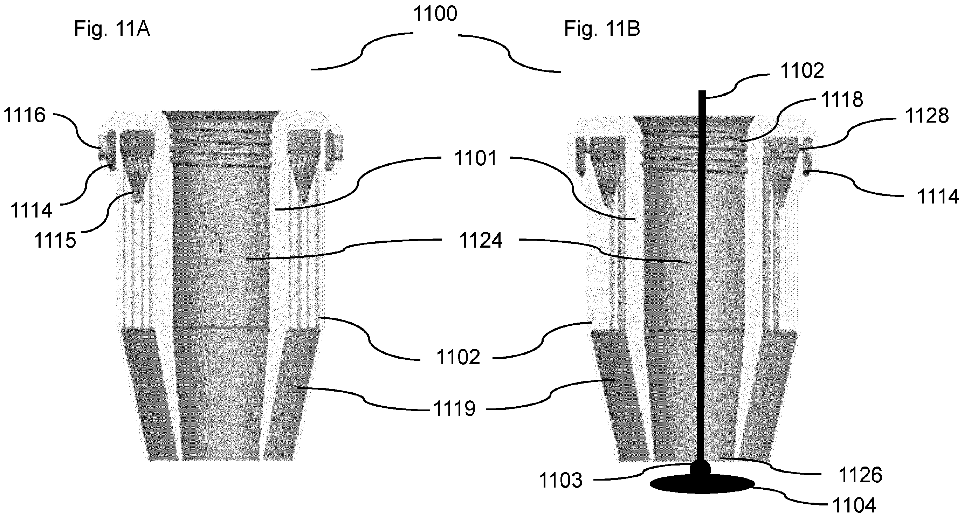

Figs. 11A through 11B illustrates a nozzle with a secondary cup with a diffuser in accordance with an embodiment of the invention. Figs. 11A through 11B illustrate different cross section views of the nozzle. Nozzle assembly 1100 where the inner cup 1101 and the outer cup 1102 of the nozzle is respectively joined or made from a single piece of material. The outer cup 1102 surrounds the inner cup 1101 but may not cover the inner cup 1101 completely in longitudinal distance. The inner cup 1001 can have a flanged top or a flat top on the end that connects with a printing torch. The nozzle assembly 1100 can have a central channel 1124 and an outer channel 1119. The outer channel 1119 is positioned between the inner cup 1101 and the outer cup 1102 of the nozzle. The central channel 1124 is formed inside the inner cup 1101. The open ends of the outer channel 1119 are aligned with the exit tip 1126 of the nozzle. The exit geometry of the illustrated nozzle is a cone. Metallic wires 1102 can be fed through the central channel 1124. The wire is melted and forms molten beads 1103 at the exit tip 1126 of the nozzle. The molten beads can be deposited on a substrate 1104.

The nozzle assembly 1100 has pressure chamber (or wall diffusers) 1114 to provide storage and transfer gas to the outer channels 1119. This can help to increase the amount of gas flow into the outer channels 1119. The cavity or chamber 1114 can be a pressure chamber for shielding gas to build up pressure to be fed into the outer channels 1119. The shielding gas can be fed into the chamber 1114 through inlets 1116. The inlet 1116 can extend outwardly from the chamber 1114 and be connected to a supply line of shielding gas. The inlet can take on any desired configuration and/or design such that it is capable of directing the shielding gas into the chamber 1114.

In various embodiments, the outer channels 1119 can be connected to the chamber or wall diffuser 1114 through one or more diffuser holes 1128. The diffuser holes 1128 can be positioned on the flange of the inner cup 1101 and transect the inner cup walls and connect the chamber 1114 with the outer channels 1119. The diffuser holes 1128 can be positioned at a location within the chamber 1114 that allows for the high-pressure shielding gas to pass from the chamber 1114 into the outer channels 1119. The diffuser holes 1128 for the pressure chamber 1114 are offset from the inlets 1116. The offset diffuser holes from the inlets enable better gas diffusion from the chamber.

Diffusers 1115 can be positioned inside the outer channels 1119. The diffusers can have various configurations such as 4-ring diffusers, 5-ring diffusers, 6-ring diffusers, and so on. Each ring of the diffuser comprises a plurality of holes. Diffuser 1115 is a 4-ring diffuser. Diffusers can be printed as an integral piece as the inner cup.

The shielding gas in central channels 1124 and the shielding gas in the outer channels 1119 can be flown at the same and/or different flow rate. The ability to have different flow rate in the channels enables better control of spatter build up in the nozzle. The inlets 1116 to the chambers 1114 can be positioned about 180 degrees apart from each other to provide access to various types of torches. The diameter of the inlets to the inner and outer high-pressure channels can be varied to achieve the desired gas flow. In various embodiments, the two-cup nozzle can have a pressure in the outer channels 1119 from about 20 psi to about 200 psi; or lower than about 20 psi; or higher than about 200 psi.

The outer cup that forms the outer channels 1119 can have varied diameters to reduce spatter buildup. Examples of the outer cup diameter can vary from about 25 mm to about 35 mm. In some embodiments, the diameter of the secondary cylindrical cup can be changed to modify gas coverage. In certain embodiments, the wall thickness can be changed in order to reduce the weight of the nozzle.

The thread 1118 on the distal end of the nozzle can connect with printing heads. Several embodiments shift the thread location relative to the rest of the nozzle to meet different fitting requirements. Many embodiments keep the same thread counts and/or thread geometries. Although nozzles in Fig. 11A and Fig. 11 B have thread, it can be appreciated that nozzles can include a slip connection to be fitted onto printing heads.

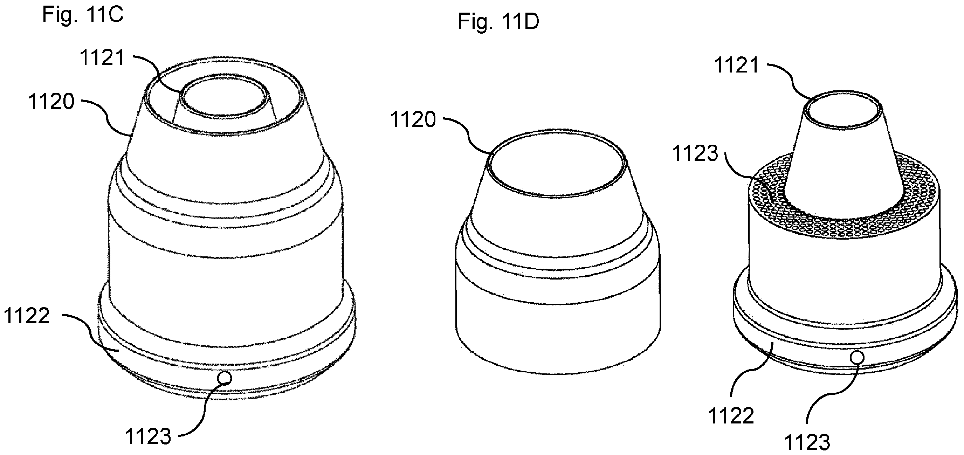

Figs. 11C through 11D illustrate a printed single piece two-cup nozzle in accordance with an embodiment. Fig. 11C shows an assembled single piece two-cup nozzle. Fig. 11D shows the outer cup 1120 and the inner cup 1121 before they are assembled. The inner cup 1121 has a flange top 1122. The outer cup 1120 surrounds the inner cup 1121 but may not cover the inner cup 1121 all the way in longitude. The outer cup 1120 is printed in one piece, and the inner cup 1121 is printed in one piece. The central channel is formed within the inner cup 1121. The outer channel is formed between the outer cup 1120 and the inner cup 1121. Diffuser holes 1123 can be positioned on the flange 1122 of the inner cup 1121 such that shielding gas flow can be transported into the outer channel. Diffusers 1123 such as a 4-ring diffuser can be printed inside the outer channel to adjust the shielding gas flow.

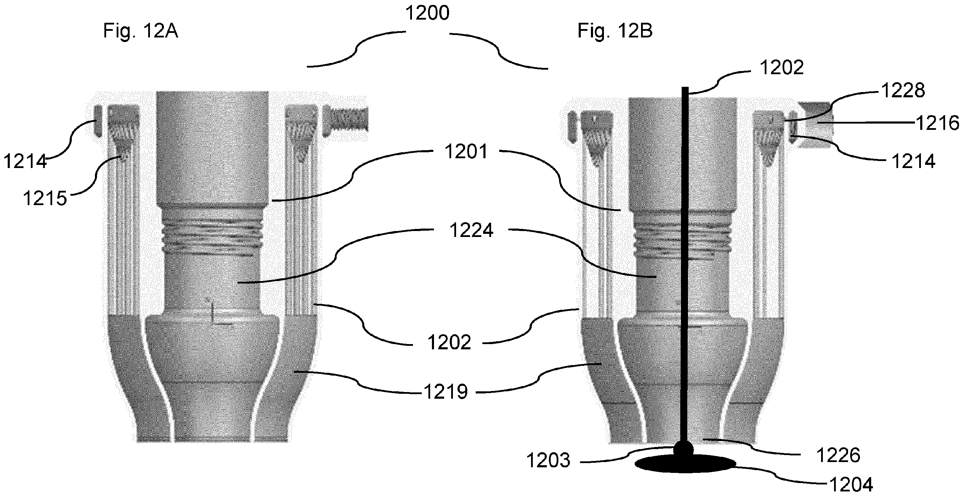

The nozzle has a cutback distance of about 10 mm behind the contact tip face. The exit of the nozzle can have various geometries including (but not limited to) cone and smooth tangent circles. Some embodiments modify the exit geometry to affect the gas flow. Figs. 12A through 12B illustrates a nozzle with two smooth tangent circles as exit tip in accordance with an embodiment of the invention. Figs. 12A through 12B illustrate different cross section views of the nozzle. As shown in Figs. 12A and 12B, the exit tip has a geometry of two smooth tangent circles. The modified geometry can help generate a smooth flow. Nozzle assembly 1200 where the inner cup 1201 and the outer cup 1202 of the nozzle is respectively joined or made from a single piece of material. The nozzle assembly 1200 can have a central channel 1224 and an outer channel 1219. The outer channel 1219 is positioned between the inner cup 1201 and the outer cup 1202 of the nozzle. The central channel 1224 is formed inside the inner cup 1201. The outer cup 1002 surrounds the inner cup 1001 but may not cover the inner cup 1001 completely in longitudinal distance. The open ends of the outer channel 1219 are aligned with the exit tip 1226 of the nozzle. Metallic wires 1202 can be fed through the central channel 1224. The wire is melted and forms molten beads 1203 at the exit tip 1226 of the nozzle. The molten beads can be deposited on a substrate 1204.

The nozzle assembly 1200 has pressure chamber (or wall diffusers) 1214 to provide storage and transfer gas to the outer channels 1219. This can help to increase the amount of gas flow into the outer channels 1219. The cavity or chamber 1214 can be a pressure chamber for shielding gas to build up pressure to be fed into the outer channels 1219. The shielding gas can be fed into the chamber 1214 through inlets 1216. The inlet 1216 can extend outwardly from the chamber 1214 and be connected to a supply line of shielding gas. The inlet can take on any desired configuration and/or design such that it is capable of directing the shielding gas into the chamber 1214.

In various embodiments, the outer channels 1219 can be connected to the chamber or wall diffuser 1214 through one or more diffuser holes 1228. The diffuser holes 1228 transect the inner cup walls of the nozzle and connect the chamber 1214 with the outer channels 1219. The diffuser holes 1228 can be positioned at a location within the chamber 1214 that allows for the high-pressure shielding gas to pass from the chamber 1214 into the outer channels 1219. The diffuser holes 1228 for the pressure chamber 1214 are offset from the inlets 1216. The offset diffuser holes from the inlets enable better gas diffusion from the chamber.

Diffusers 1215 can be positioned inside the outer channels 1219. The diffusers can have various configurations such as 4-ring diffusers, 5-ring diffusers, 6-ring diffusers, and so on. Each ring of the diffuser comprises a plurality of holes. Diffuser 1215 is a 4-ring diffuser. Diffusers can be printed as an integral piece as the inner cup.

The shielding gas in central channels 1224 and the shielding gas in the outer channels 1219 can be flown at the same and/or different flow rate. The ability to have different flow rate in the channels enables better control of spatter build up in the nozzle. The inlets 1216 to the chambers 1214 can be positioned about 180 degrees apart from each other to provide access to various types of torches. The diameter of the inlets to the inner and outer high-pressure channels can be varied to achieve the desired gas flow. In various embodiments, the two-cup nozzle can have a pressure in the outer channels 1219 from about 20 psi to about 200 psi; or lower than about 20 psi; or higher than about 200 psi.

The outer cup that forms the outer channels 1219 can have varied diameters to reduce spatter buildup. Examples of the outer cup diameter can vary from about 25 mm to about 35 mm. In some embodiments, the diameter of the secondary cylindrical cup can be changed to modify gas coverage. In certain embodiments, the wall thickness can be changed in order to reduce the weight of the nozzle.

Several embodiments implement two cups in nozzles to expand gas coverage. Outer cup of two-cup nozzles can be fabricated such as (but not limited to) printed in two pieces and inner cup of two-cup nozzles can be fabricated in one-piece. Post fabrication treatment such as (but not limited to) machining and/or heat treatment can be applied to the nozzles to achieve desired geometries and/or mechanical properties. The inner cup and the outer cup can be assembled and connected using screws, fasteners, latches, and/or adhesives.

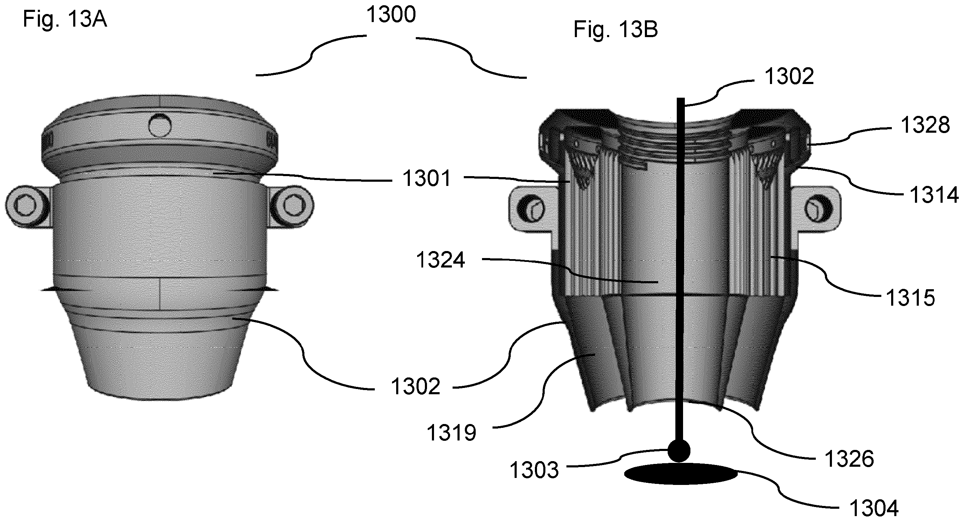

Figs. 13A through 13B illustrate two-piece two-cup nozzle in accordance with an embodiment of the invention. Nozzle assembly 1300 where the inner cup 1301 of the nozzle is made from a single piece of material. The outer cup 1302 is made from two pieces of material and assembled together. The nozzle assembly 1300 can have a central channel 1324 and an outer channel 1319. The outer channel 1319 is positioned between the inner cup 1301 and the outer cup 1302 of the nozzle. The central channel 1324 is formed inside the inner cup 1301. The outer cup 1302 surrounds the inner cup 1301 but may not cover the inner cup 1301 completely in longitudinal distance. The inner cup 1301 can have a flanged top or a flat top on the end that connects with a printing torch. The open ends of the outer channel 1319 are aligned with the exit tip 1326 of the nozzle. Metallic wires 1302 can be fed through the central channel 1324. The wire is melted and forms molten beads 1303 at the exit tip 1326 of the nozzle. The molten beads can be deposited on a substrate 1304.

The nozzle assembly 1300 has pressure chamber (or wall diffusers) 1314 to provide storage and transfer gas to the outer channels 1319. This can help to increase the amount of gas flow into the outer channels 1319. The cavity or chamber 1314 can be a pressure chamber for shielding gas to build up pressure to be fed into the outer channels 1319. The shielding gas can be fed into the chamber 1314 through inlets (not shown). The inlet can extend outwardly from the chamber 1314 and be connected to a supply line of shielding gas. The inlet can take on any desired configuration and/or design such that it is capable of directing the shielding gas into the chamber 1314.

In various embodiments, the outer channels 1319 can be connected to the chamber or wall diffuser 1314 through one or more diffuser holes 1328. The diffuser holes 1328 may locate on the flange of the inner cup and transect the inner cup walls of the nozzle and connect the chamber 1314 with the outer channels 1319. The diffuser holes 1328 can be positioned at a location within the chamber 1314 that allows for the high-pressure shielding gas to pass from the chamber 1314 into the outer channels 1319. The diffuser holes 1328 for the pressure chamber 1314 are offset from the inlets. The offset diffuser holes from the inlets enable better gas diffusion from the chamber.

The shielding gas in central channels 1324 and the shielding gas in the outer channels 1319 can be flown at the same and/or different flow rate. The ability to have different flow rate in the channels enables better control of spatter build up in the nozzle. The inlets to the chambers 1314 can be positioned about 180 degrees apart from each other to provide access to various types of torches. The diameter of the inlets to the inner and outer high-pressure channels can be varied to achieve the desired gas flow. In various embodiments, the two-cup nozzle can have a pressure in the outer channels 1319 from about 20 psi to about 200 psi; or lower than about 20 psi; or higher than about 200 psi.

The outer cup that forms the outer channels 1319 can have varied diameters to reduce spatter buildup. Examples of the outer cup diameter can vary from about 25 mm to about 35 mm. In some embodiments, the diameter of the secondary cylindrical cup can be changed to modify gas coverage. In certain embodiments, the wall thickness can be changed in order to reduce the weight of the nozzle.

Diffusers 1315 can be positioned inside the outer channels 1319. The diffusers can have various configurations such as 4-ring diffusers, 5-ring diffusers, 6-ring diffusers, and so on. Each ring of the diffuser comprises a plurality of holes. Diffuser 1315 is a 4-ring diffuser. Diffusers can be printed as an integral piece as the inner cup.

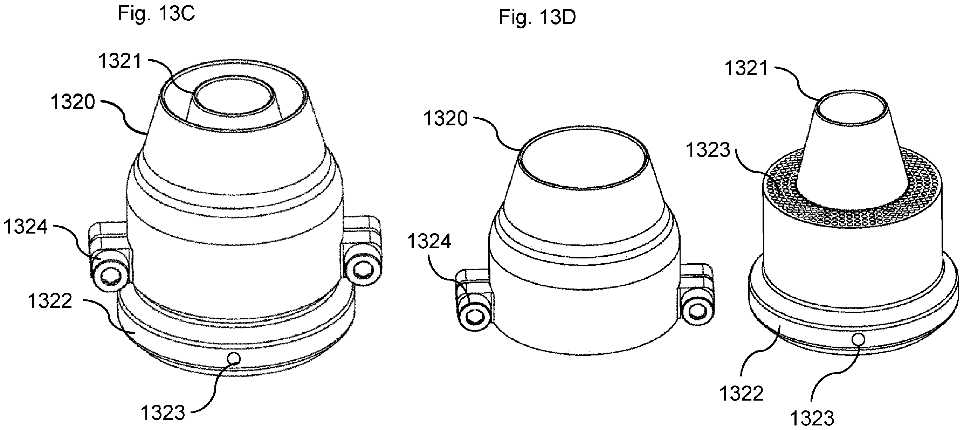

Figs. 13C through 13D illustrate a printed two-piece two-cup nozzle in accordance with an embodiment of the invention. Fig. 13C illustrates an assembled two-piece nozzle. Fig. 13D shows the printed two-piece outer cup 1320 and the printed single piece inner cup 1321 before they are assembled. The inner cup 1321 has a flange top 1322. The outer cup 1320 surrounds the inner cup 1321 but may not cover the inner cup 1321 all the way in longitude. The outer cup 1320 is printed in two pieces and assembled together using screws 1324. The inner cup 1321 is printed in one piece. The central channel is formed within the inner cup 1321. The outer channel is formed between the outer cup 1320 and the inner cup 1321. Diffuser holes 1323 can be positioned on the flange 1322 of the inner cup 1321 such that shielding gas flow can be transported into the outer channel. Diffusers 1323 such as a 4-ring diffuser can be printed inside the outer channel to adjust the shielding gas flow. The inner cup and outer cup can be printed with same or different metallic materials such as (but not limited to) Ni-based alloys, Ni-based superalloys, Ni-Cr based alloys, Cu-based alloys, Cu-Ni-based alloys, Cu-Cr-Nb alloys, Cu-Co-Nb-based alloys, ferrous alloys, iron-based alloys, Co-Cr-based alloys, Ti-based alloys, and steel.

Although not specifically illustrated in previous figures 10A through 14B, it can be appreciated that the nozzles and/or nozzle assemblies can be configured to connect to any number of printing heads. In some such embodiments, the nozzle and/or nozzle assembly can be a press fit or can be configured to connect to another external component to subsequently connect the nozzle and/or nozzle assembly to the printing head. Additionally, some embodiments can be configured to connect to the printing head through a threaded connection. Accordingly, some embodiments can have a threaded section of the nozzle or nozzle assembly for interfacing with the printing head. Several embodiments can be configured to include a slip connection or a nozzle that is a press fit onto the printing head.

### DOCTRINE OF EQUIVALENTS

This description of the invention has been presented for the purposes of illustration and description. It is not intended to be exhaustive or to limit the invention to the precise form described, and modifications and variations are possible in light of the teachings above. The embodiments were chosen and described to explain the principles of the invention and its practical applications. This description will enable others skilled in the art to best utilize and practice the invention in various embodiments and with various modifications as are suited to a particular use. The scope of the invention is defined by the following claims.

Examples are set out in the following clauses:
1. A printing nozzle comprising:
   a main cylindrical body forming a first fluid flow channel extending a length of the body from a proximal end and a distal end and configured to receive a first fluid; and
   a second cylindrical body forming a second fluid flow channel concentrically located exterior to the first fluid flow channel, and the second fluid flow channel extends a length of the body from a proximal end and a distal end and configured to receive a second fluid and direct the second fluid surrounding the first fluid flow;
   wherein the proximal end of the main cylindrical body is adjacent to the proximal end of the second cylindrical body; and
   wherein the distal end of the main cylindrical body aligns with the distal end of the second cylindrical body.
2. The printing nozzle of clause 1, further comprising a plurality of diffuser holes circumferentially disposed on the main cylindrical body wherein each of the plurality of diffuser holes connects the second fluid flow channel to an exterior surface of the main cylindrical body.
3. The printing nozzle of clause 2, further comprising an external housing, wherein the external housing cooperatively engages with the exterior surface of the main cylindrical body and forms a seal therebetween, the external housing has an external housing wall that sits away from the exterior surface of the main cylindrical body and forms a chamber therebetween, wherein the external housing is aligned with the main cylindrical body such that the chamber covers each of the plurality of diffuser holes, and wherein the external housing has a fluid inlet configured to receive a fluid and transmit the fluid into the chamber such that the fluid can then be transferred to the second fluid channel by way of the plurality of diffuser holes.
4. The printing nozzle of clause 3, wherein the fluid inlet has an exterior surface that extends to a top surface of the external housing.
5. The printing nozzle of clause 3 or 4, wherein the fluid inlet has an elongated body that extends outward from the external housing and is perpendicular to the housing with an opening that connects the chamber to a fluid supply system.
6. The printing nozzle of any of clauses 1 to 5, wherein the second fluid flow channel is configured to maintain the second fluid at a pressure greater than or equal to a pressure of the first fluid.
7. The printing nozzle of any of clauses 1 to 6, wherein the second fluid flow channel comprises a diffuser comprising a plurality of holes, wherein the diffuser is configured to reduce a velocity of the second fluid.
8. The printing nozzle of any of clauses 1 to 7, wherein the nozzle is configured to connect with a wire arc additive manufacturing printer.
9. The printing nozzle of any of clauses 1 to 8, wherein the first fluid is selected from the group consisting of: carbon dioxide, argon, helium, nitrogen, neon, xenon, oxygen, and any combinations thereof; wherein the second fluid is selected from the group consisting of: carbon dioxide, argon, helium, nitrogen, neon, xenon, oxygen, and any combinations thereof.
10. The printing nozzle of any of clauses 1 to 9, wherein the nozzle comprises a metallic material selected from the group consisting of: a Ni-based alloy, a Ni-based superalloy, a Ni-Cr based alloy, a Cu-based alloy, a Cu-Ni-based alloy, a Cu-Cr-Nb alloy, a Cu-Co-Nb-based alloy, a ferrous alloy, an iron-based alloy, a Co-Cr-based alloys, a Ti-based alloy, and a steel.
11. A printing nozzle comprising:
   a main cylindrical body having a first end having a first diameter and a second end having a second diameter that is smaller than the first diameter, wherein the main cylindrical body has a wall with an outer surface and an inner surface, wherein the wall extends a longitudinal length of the main cylindrical body between the first and second end;
   a second cylindrical body having a first end having a first diameter and a second end having a second diameter that is smaller than the first diameter, wherein the second cylindrical body has a wall with an outer surface and an inner surface, wherein the wall extends a longitudinal length of the second cylindrical body between the first and second end, wherein the second cylindrical body concentrically located exterior to the main cylindrical body;
   wherein the first end of the second cylindrical body is adjacent to the first end of the main cylindrical body;
   wherein the inner surface of the main cylindrical body forms a first fluid flow channel configured to receive a first fluid; the outer surface of the main cylindrical body and the inner surface of the second cylindrical body forms a second fluid flow channel configured to receive a second fluid;
   a plurality of diffuser holes circumferentially disposed on the wall of the main cylindrical body such that each of the plurality of diffuser holes transcends through the wall connecting the second fluid channel with the outer surface of the main cylindrical body.
12. The printing nozzle of clause 11, further comprising an external housing, wherein the external housing cooperatively engages with the outer surface of the main cylindrical body and forms a seal therebetween, wherein the external housing has an external housing wall that sits away from the outer surface of the main cylindrical body and forms a chamber therebetween, wherein the external housing is aligned with the main cylindrical body such that the chamber covers each of the plurality of diffuser holes, and wherein the external housing has a fluid inlet configured to receive the second fluid and transmit the second fluid into the chamber such that the second fluid can then be transferred to the second fluid channel by way of the plurality of diffuser holes.
13. The printing nozzle of clause 12, wherein the fluid inlet has an exterior surface that extends to a top surface of the external housing.
14. The printing nozzle of clause 12 or 13, wherein the fluid inlet has an elongated body that extends outward from the external housing and is perpendicular to the housing with an opening that connects the chamber to a fluid supply system.
15. The printing nozzle of any of clauses 11 to 14, wherein the second fluid flow channel is configured to maintain the second fluid at a pressure greater than or equal to a pressure of the first fluid.
16. The printing nozzle of any of clauses 11 to 15, wherein the second fluid flow channel comprises a diffuser comprising a plurality of holes, wherein the diffuser is configured to reduce a velocity of the second fluid.
17. The printing nozzle of any of clauses 11 to 16, wherein the nozzle is configured to connect with a wire arc additive manufacturing printer.
18. The printing nozzle of any of clauses 11 to 17, wherein the first fluid is selected from the group consisting of: carbon dioxide, argon, helium, nitrogen, neon, xenon, oxygen, and any combinations thereof; wherein the second fluid is selected from the group consisting of: carbon dioxide, argon, helium, nitrogen, neon, xenon, oxygen, and any combinations thereof.
19. The printing nozzle of any of clauses 11 to 18, wherein the nozzle comprises a metallic material selected from the group consisting of: a Ni-based alloy, a Ni-based superalloy, a Ni-Cr based alloy, a Cu-based alloy, a Cu-Ni-based alloy, a Cu-Cr-Nb alloy, a Cu-Co-Nb-based alloy, a ferrous alloy, an iron-based alloy, a Co-Cr-based alloys, a Ti-based alloy, and a steel.

## Claims

1. A printing nozzle comprising:
a main cylindrical body forming a first fluid flow channel extending a length of the body from a proximal end and a distal end and configured to receive a first fluid; and
a second cylindrical body forming a second fluid flow channel concentrically located exterior to the first fluid flow channel, and the second fluid flow channel extends a length of the body from a proximal end and a distal end and configured to receive a second fluid and direct the second fluid surrounding the first fluid flow;
wherein the proximal end of the main cylindrical body is adjacent to the proximal end of the second cylindrical body; and
wherein the distal end of the main cylindrical body aligns with the distal end of the second cylindrical body.

2. The printing nozzle of claim 1, further comprising a plurality of diffuser holes circumferentially disposed on the main cylindrical body wherein each of the plurality of diffuser holes connects the second fluid flow channel to an outer surface of the main cylindrical body.

3. The printing nozzle of claim 2, further comprising an external housing, wherein the external housing cooperatively engages with the outer surface of the main cylindrical body and forms a seal therebetween, the external housing has an external housing wall that sits away from the outer surface of the main cylindrical body and forms a chamber therebetween, wherein the external housing is aligned with the main cylindrical body such that the chamber covers each of the plurality of diffuser holes, and wherein the external housing has a fluid inlet configured to receive a fluid and transmit the fluid into the chamber such that the fluid can then be transferred to the second fluid channel by way of the plurality of diffuser holes.

4. A printing nozzle comprising:
a main cylindrical body having a first end having a first diameter and a second end having a second diameter that is smaller than the first diameter, wherein the main cylindrical body has a wall with an outer surface and an inner surface, wherein the wall extends a longitudinal length of the main cylindrical body between the first and second end;
a second cylindrical body having a first end having a first diameter and a second end having a second diameter that is smaller than the first diameter, wherein the second cylindrical body has a wall with an outer surface and an inner surface, wherein the wall extends a longitudinal length of the second cylindrical body between the first and second end, wherein the second cylindrical body concentrically located exterior to the main cylindrical body;
wherein the first end of the second cylindrical body is adjacent to the first end of the main cylindrical body;
wherein the inner surface of the main cylindrical body forms a first fluid flow channel configured to receive a first fluid; the outer surface of the main cylindrical body and the inner surface of the second cylindrical body forms a second fluid flow channel configured to receive a second fluid;
a plurality of diffuser holes circumferentially disposed on the wall of the main cylindrical body such that each of the plurality of diffuser holes transcends through the wall connecting the second fluid channel with the outer surface of the main cylindrical body.

5. The printing nozzle of claim 4, further comprising an external housing, wherein the external housing cooperatively engages with the outer surface of the main cylindrical body and forms a seal therebetween, wherein the external housing has an external housing wall that sits away from the outer surface of the main cylindrical body and forms a chamber therebetween, wherein the external housing is aligned with the main cylindrical body such that the chamber covers each of the plurality of diffuser holes, and wherein the external housing has a fluid inlet configured to receive the second fluid and transmit the second fluid into the chamber such that the second fluid can then be transferred to the second fluid channel by way of the plurality of diffuser holes.

6. The printing nozzle of claim 3 or 5, wherein the fluid inlet has an exterior surface that extends to a top surface of the external housing.

7. The printing nozzle of claim 3 or 5, wherein the fluid inlet has an elongated body that extends outward from the external housing and is perpendicular to the housing with an opening that connects the chamber to a fluid supply system.

8. The printing nozzle of claim 1 or 4, wherein the second fluid flow channel is configured to maintain the second fluid at a pressure greater than or equal to a pressure of the first fluid.

9. The printing nozzle of claim 1 or 4, wherein the second fluid flow channel comprises a diffuser comprising a plurality of holes, wherein the diffuser is configured to reduce a velocity of the second fluid.

10. The printing nozzle of claim 1 or 4, wherein the nozzle is configured to connect with a wire arc additive manufacturing printer.

11. The printing nozzle of claim 1 or 4, wherein the first fluid is selected from the group consisting of: carbon dioxide, argon, helium, nitrogen, neon, xenon, oxygen, and any combinations thereof; wherein the second fluid is selected from the group consisting of: carbon dioxide, argon, helium, nitrogen, neon, xenon, oxygen, and any combinations thereof.

12. The printing nozzle of claim 1 or 4, wherein the nozzle comprises a metallic material selected from the group consisting of: a Ni-based alloy, a Ni-based superalloy, a Ni-Cr based alloy, a Cu-based alloy, a Cu-Ni-based alloy, a Cu-Cr-Nb alloy, a Cu-Co-Nb-based alloy, a ferrous alloy, an iron-based alloy, a Co-Cr-based alloys, a Ti-based alloy, and a steel.
